(19) Europäisches Patentamt
European Patent Office
Office européen des brevets

(11) **EP 4 398 344 A1**

(12) **EUROPEAN PATENT APPLICATION**

(43) Date of publication:
**10.07.2024 Bulletin 2024/28**

(21) Application number: **23214974.0**

(22) Date of filing: **07.12.2023**

(51) International Patent Classification (IPC):
**H01M 4/485** (2010.01)    **H01M 4/131** (2010.01)
**H01M 4/36** (2006.01)    **H01M 4/38** (2006.01)

(52) Cooperative Patent Classification (CPC):
**H01M 4/485; H01M 4/131; H01M 4/364;
H01M 4/386;** H01M 10/0525; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2022 US 202263386324 P**

(71) Applicant: **Largan Medical Co., Ltd.
Taichung City 408 (TW)**

(72) Inventors:
• CHEN, Po-Tsun
  Taichung City (TW)
• HUANG, Shih Yu
  Taichung City (TW)
• TSAI, Cheng-Yu
  Taichung City (TW)
• Teng, Chun-Hung
  Taichung City (TW)

(74) Representative: **Lang, Christian
LangPatent Anwaltskanzlei IP Law Firm
Ingolstädter Straße 5
80807 München (DE)**

(54) **COMPOSITION, ANODE AND BATTERY BACKGROUND**

(57)    A composition includes an active composition. The active composition includes a niobium-titanium oxide and a silicon active material, or includes a doped niobium-titanium oxide and the silicon active material. The niobium-titanium oxide includes niobium element, titanium element and oxygen element. The doped niobium-titanium oxide includes niobium element, titanium element and oxygen element.

EP 4 398 344 A1

## Description

**BACKGROUND**

Technical Field

The present disclosure relates to a composition, an anode and a battery. More particularly, the present disclosure relates to a composition and an anode which can improve the safety, cycle life and energy density of the battery.

Description of Related Art

The current goals of research and development of batteries are to achieve the demands of high energy density, high working voltage, fast charging speed and long cycle life. The commonly used materials for anodes are carbon or graphite nowadays, but the theoretical energy density of graphite is far lower than the requirement of kinetic energy of large electric devices, such as electric cars. In the cycle process of high current, the carbon or graphite, which mostly has a layered structure, cannot withstand the rapid intercalation and deintercalation of ions. Therefore, it is prone to an irreversible collapse of the structure, resulting in reducing the capacity and storage life. It is also prone to polarization when the current density is too high, which makes the lithium ion be reduced into lithium metal and form lithium dendrite on the surface of the electrode pieces, resulting in short circuit in the battery and the safety concerns.

**SUMMARY**

According to one aspect of the present disclosure, a composition includes an active composition. The active composition includes a niobium-titanium oxide and a silicon active material. The niobium-titanium oxide includes a niobium element, a titanium element and an oxygen element. When a weight ratio of the niobium-titanium oxide in the active composition is Ptn, and a weight ratio of the silicon active material in the active composition is Ps, the following condition is satisfied: $0.12 \leq Ptn/Ps \leq 99.0$.

According to the aforementioned composition, wherein the niobium-titanium oxide is a doped niobium-titanium oxide.

According to the aforementioned composition, wherein the doped niobium-titanium oxide is doped with at least one element, and the at least one element is Li, Mn, Ga, Ta, W, F, P, Na or Mo.

According to the aforementioned composition, wherein the weight ratio of the niobium-titanium oxide in the active composition is larger than the weight ratio of the silicon active material in the active composition.

According to the aforementioned composition, wherein the weight ratio of the niobium-titanium oxide in the active composition is Ptn, the weight ratio of the silicon active material in the active composition is Ps, and the following condition is satisfied: $1.2 \leq Ptn/Ps \leq 25.0$.

According to the aforementioned composition, wherein a particle diameter of the silicon active material is sD50, and the following condition is satisfied: $10 \text{ nm} \leq sD50 \leq 10000 \text{ nm}$.

According to the aforementioned composition, wherein a particle diameter of the niobium-titanium oxide is tnD50, and the following condition is satisfied: $20 \text{ nm} \leq tnD50 \leq 9000 \text{ nm}$.

According to the aforementioned composition, wherein a particle diameter of the silicon active material is sD50, a particle diameter of the niobium-titanium oxide is tnD50, and the following condition is satisfied: $0.01 \leq tnD50/sD50 \leq 20.0$.

According to the aforementioned composition, the composition further including: an inactive composition, wherein the inactive composition is selected from the group consisting of a polymer, a carbon material, a metal, an alloy, a non-metal oxide, a metal oxide and an organic compound.

According to the aforementioned composition, wherein the active composition further includes a carbon active material, the weight ratio of the niobium-titanium oxide in the active composition is Ptn, the weight ratio of the silicon active material in the active composition is Ps, a weight ratio of the carbon active material in the active composition is Pc, and the following condition is satisfied: $0.01 \leq Ptn/(Ps+Pc) \leq 25.0$.

According to one aspect of the present disclosure, an anode includes the composition of the aforementioned aspect.

According to one aspect of the present disclosure, a battery includes the anode of the aforementioned aspect.

According to the aforementioned battery, wherein a maximum among discharge volumetric capacities of a first cycle to a fifteen cycle of the battery with a current of 2C for charging and discharging is C2VMax, and the following condition is satisfied: $100 \text{ mAh/cm}^3 \leq C2VMax \leq 800 \text{ mAh/cm}^3$.

According to the aforementioned battery, wherein a discharge volumetric capacity of a sixtieth cycle of the battery with a current of 2C for charging and discharging is C2V60, and the following condition is satisfied: $100 \text{ mAh/cm}^3$

$\le$ C2V60 $\le$ 800 mAh/cm$^3$.

According to the aforementioned battery, wherein a discharge volumetric capacity of a fifth cycle of the battery with a current of 2C for charging and discharging is C2V5, a discharge volumetric capacity of a tenth cycle of the battery with the current of 2C for charging and discharging is C2V10, and the following condition is satisfied: 0.70 $\le$ C2V10/C2V5.

According to the aforementioned battery, wherein a discharge volumetric capacity of a fifth cycle of the battery with a current of 2C for charging and discharging is C2V5, a discharge volumetric capacity of a twentieth cycle of the battery with the current of 2C for charging and discharging is C2V20, and the following condition is satisfied: 0.60 $\le$ C2V20/C2V5.

According to the aforementioned battery, wherein a total number of Coulombic efficiency greater than 85% and smaller than 110% in first fifteen cycles of the battery with a current of 2C for charging and discharging is n85C2E15, and the following condition is satisfied: 10 $\le$ n85C2E15 $\le$ 15.

According to the aforementioned battery, wherein a total number of Coulombic efficiency greater than 85% and smaller than 110% in first fifty cycles of the battery with a current of 2C for charging and discharging is n85C2E50, and the following condition is satisfied: 40 $\le$ n85C2E50 $\le$ 50.

According to the aforementioned battery, wherein an average of Coulombic efficiencies in first fifteen cycles of the battery with a current of 2C for charging and discharging is aC2E15, and the following condition is satisfied: 80% $\le$ aC2E15 $\le$ 110%.

According to the aforementioned battery, wherein an average of Coulombic efficiencies in first fifty cycles of the battery with a current of 2C for charging and discharging is aC2E50, and the following condition is satisfied: 75% $\le$ aC2E50 $\le$ 110%.

According to the aforementioned battery, wherein a discharge volumetric capacity of a first cycle of the battery with a current of 1C for charging and discharging is C1V1, a discharge volumetric capacity of a first cycle of the battery with a current of 2C for charging and discharging is C2V1, and the following condition is satisfied: 0.50 $\le$ C2V1/C1V1.

According to one aspect of the present disclosure, a composition includes an active composition. The active composition includes a niobium-titanium oxide and a silicon active material. The niobium-titanium oxide is a doped niobium-titanium oxide. The doped niobium-titanium oxide includes a niobium element, a titanium element and an oxygen element.

According to the aforementioned composition, wherein the doped niobium-titanium oxide is doped with at least one element, and the at least one element is Li, Mn, Ga, Ta, W, F, P, Na or Mo.

According to the aforementioned composition, wherein a weight ratio of the niobium-titanium oxide in the active composition is Ptn, a weight ratio of the silicon active material in the active composition is Ps, and the following condition is satisfied: 1.2 $\le$ Ptn/Ps $\le$ 25.0.

According to the aforementioned composition, wherein a particle diameter of the silicon active material is sD50, and the following condition is satisfied: 50 nm $\le$ sD50 $\le$ 3000 nm.

According to the aforementioned composition, wherein a particle diameter of the silicon active material is sD50, a particle diameter of the niobium-titanium oxide is tnD50, and the following condition is satisfied: 0.01 $\le$ tnD50/sD50 $\le$ 20.0.

According to one aspect of the present disclosure, an anode includes the composition of the aforementioned aspect.

According to one aspect of the present disclosure, a battery includes the anode of the aforementioned aspect.

According to the aforementioned battery, wherein a maximum among discharge gravimetric capacities of a first cycle to a fifteen cycle of the battery with a current of 2C for charging and discharging is C2GMax, and the following condition is satisfied: 100 mAh/g $\le$ C2GMax $\le$ 800 mAh/g.

According to the aforementioned battery, wherein a discharge gravimetric capacity of a sixtieth cycle of the battery with a current of 2C for charging and discharging is C2G60, and the following condition is satisfied: 100 mAh/g $\le$ C2G60 $\le$ 800 mAh/g.

According to the aforementioned battery, wherein a discharge volumetric capacity of a fifth cycle of the battery with a current of 2C for charging and discharging is C2V5, a discharge volumetric capacity of a sixtieth cycle of the battery with the current of 2C for charging and discharging is C2V60, and the following condition is satisfied: 0.50 $\le$ C2V60/C2V5.

According to the aforementioned battery, wherein a total number of Coulombic efficiency greater than 90% and smaller than 110% in first fifteen cycles of the battery with a current of 2C for charging and discharging is n90C2E15, and the following condition is satisfied: 8 $\le$ n90C2E15 $\le$ 15.

According to the aforementioned battery, wherein a total number of Coulombic efficiency greater than 90% and smaller than 110% in first fifty cycles of the battery with a current of 2C for charging and discharging is n90C2E50, and the following condition is satisfied: 30 $\le$ n90C2E50 $\le$ 50.

According to the aforementioned battery, wherein a discharge volumetric capacity of a first cycle of the battery with a current of 2C for charging and discharging is C2V1, a discharge volumetric capacity of a first cycle of the battery with a current of 4C for charging and discharging is C4V1, and the following condition is satisfied: $0.50 \leq$ C4V1/C2V1.

## DETAILED DESCRIPTION

According to the present disclosure, a composition includes an active composition and an inactive composition, wherein the active composition can include a niobium-titanium oxide, a silicon active material or a carbon active material, and the inactive composition can be selected from the group consisting of a polymer, a carbon material, a metal, an alloy, a non-metal oxide, a metal oxide, a fluoride, an organic compound, an adhesive, a conductive agent and an additive.

According to the present disclosure, the niobium-titanium oxide and the silicon active material are applied to the anode material. Because the niobium-titanium oxide has small change in crystal volume and has high mechanical stability during the intercalation of lithium, it can adapt to relatively large current density and maintain the integrity of the overall structure, so as to prevent the problem of poor cycle life of the battery caused by structural damage. In the process of quick charging and discharging, the niobium-titanium oxide not only can effectively prevent the formation of solid electrolyte interface (SEI) membrane and reduce the problems of capacity decreasing and overall battery impedance increasing due to the loss of lithium ions, but also can prevent the formation of lithium dendrite and improve the safety of using the battery. By the arrangement that the niobium-titanium oxide includes the niobium element and the titanium element, and can be further doped with proper elements, it has the redox ability of providing a plurality of electron pairs. Further, the niobium-titanium oxide can be mixed with the silicon active material in a proper ratio, so not only the rate performance of the battery is enhanced and the charging efficiency of the battery is improved, but the goal of obtaining high energy density under the charging and discharging condition with large current density is also achieved.

According to the present disclosure, the niobium-titanium oxide includes a non-doped niobium-titanium oxide and a doped niobium-titanium oxide. A constitution of the non-doped niobium-titanium oxide at least includes a niobium element, a titanium element and an oxygen element. The non-doped niobium-titanium oxide includes a plurality of compounds, which can be further represented by the following chemical formula:

$$Ti_xNb_yO_z;$$

wherein $z \leq 4x+5y$. For example, it can be $TiNb_2O_7$, $Ti_2Nb_{10}O_{29}$, $TiNb_{14}O_{37}$ and $TiNb_{24}O_{62}$. A crystal structure of the niobium-titanium oxide can be a cubic crystal system, a monoclinic crystal system, an orthorhombic crystal system, a $ReO_3$-type lattice or a layered structure. The doped niobium-titanium oxide can be at least one compound selected from the aforementioned non-doped niobium-titanium oxides which is doped with at least one type of element, and the doped niobium-titanium oxide can be further represented by the following chemical formula:

$$Ti_{(x-a)}M1_aNb_{(y-b)}M2_bO_{(z-c)}M3_c;$$

wherein M1, M2 and M3 are the doped elements, $0 \leq a < x$, $0 \leq b < y$, and $0 \leq c < z$. The change of structure can be resulted from adjusting the doped elements or the ratio of the doped elements. At least one of the inactive compositions can be further selected to cover or fill a surface or pores of the niobium-titanium oxide. The chemical properties of the niobium-titanium oxide are changed by the doping method, which is favorable for reducing the difficulty of migration of the electrons and ions, and the conductivity of the niobium-titanium oxide can be further improved.

According to the present disclosure, the doped element can be any element selected from group IA, group IIA, group IVB, group VB, group VIB, group VIIB, group VIIIB, group IB, group IIB, group IIIA, group IVA, group VA, group VIA and group VIIA, which can be further selected from at least one of Li, B, F, Na, Mg, Al, Si, P, S, Cl, Ca, V, Cr, Mn, Fe, Co, Ni, Zn, Ga, As, Br, Zr, Mo, Sb, I, Ta, W or Bi. It is favorable for improving the conductivity of the doped niobium-titanium oxide by selecting and being doped with the elements of high conductivity or the relatively light elements, and the quick charging performance of the battery can be improved and the energy density can be enhanced. By doping the niobium-titanium oxide with proper elements, a relatively low potential energy level is formed within the energy gap of the doped niobium-titanium oxide, and the difficulty of migration of the electrons can be reduced, which is favorable for enhancing the conductivity of the doped niobium-titanium oxide. Also, the silicon active material with high theoretical energy density is added, which is favorable for significantly enhancing the overall capacity and energy density of the battery.

When a weight ratio of the niobium-titanium oxide in the active composition is Ptn, and a weight ratio of the silicon active material in the active composition is Ps, the following condition is satisfied: $0.12 \leq$ Ptn/Ps $\leq 99.0$. The niobium-titanium oxide and the silicon active material are mixed in a proper ratio, which is favorable for improving the stability and enhancing the energy density of the battery in the charging and discharging process of high current. Moreover, the following conditions can be satisfied: $0.25 \leq$ Ptn/Ps $\leq 60.0$; $0.5 \leq$ Ptn/Ps $\leq 40.0$; $0.8 \leq$ Ptn/Ps $\leq 35.0$; $1.05 \leq$ Ptn/Ps $\leq 30.0$; $1.2 \leq$ Ptn/Ps $\leq 25.0$; $1.5 \leq$ Ptn/Ps $\leq 20.0$; $1.8 \leq$ Ptn/Ps $\leq 18.0$; or $2.0 \leq$ Ptn/Ps $\leq 15.0$.

The weight ratio of the niobium-titanium oxide in the active composition is larger than the weight ratio of the silicon active material in the active composition. The niobium-titanium oxide and the silicon active material are mixed in a proper ratio, which is favorable for enhancing the charging efficiency and energy density of the battery.

According to the present disclosure, the silicon active material can be silicon, silicon oxide, silicon carbon composite, silicon alloy or any one of the aforementioned silicon active materials with the addition of at least one of the inactive compositions. The inactive composition and the silicon active material can be prepared into a mixture. Alternatively, the inactive composition and the silicon active material can form chemical bonds. Alternatively, the inactive composition and the silicon active material can form a shell-core structure. Alternatively, the inactive composition can form a layered structure. The inactive composition provides the effects of buffering, protecting and enhancing conductivity. It can adapt to the dramatic volume change of the silicon active material during charging and discharging and maintain the integrity of the overall structure, and the problem of increasing the overall battery impedance resulting from the generation of SEI membrane as the silicon active material in direct contact with the electrolyte is prevented.

According to the present disclosure, when a particle diameter of the silicon active material is sD50, the following condition is satisfied: $10 \text{ nm} \leq sD50 \leq 10000 \text{ nm}$. The silicon active material with a proper particle diameter is selected, which is favorable for reducing the aggregation of the silicon active material and the force from the volume expansion of the silicon active material, and saving the cost. Moreover, the following conditions can be satisfied: $20 \text{ nm} \leq sD50 \leq 99 \text{ nm}$; $40 \text{ nm} \leq sD50 \leq 95 \text{ nm}$; $60 \text{ nm} \leq sD50 \leq 90 \text{ nm}$; $105 \text{ nm} \leq sD50 \leq 1000 \text{ nm}$; $150 \text{ nm} \leq sD50 \leq 300 \text{ nm}$; $450 \text{ nm} \leq sD50 \leq 700 \text{ nm}$; $1200 \text{ nm} \leq sD50 \leq 8000 \text{ nm}$; $1500 \text{ nm} \leq sD50 \leq 3000 \text{ nm}$; $4000 \text{ nm} \leq sD50 \leq 6000 \text{ nm}$; or $50 \text{ nm} \leq sD50 \leq 3000 \text{ nm}$.

When a particle diameter of the niobium-titanium oxide is tnD50, the following condition is satisfied: $20 \text{ nm} \leq tnD50 \leq 9000 \text{ nm}$. The niobium-titanium oxide with a proper particle diameter is selected, which is favorable for reducing the time for ion transfer and enhancing the rate performance. Moreover, the following conditions can be satisfied: $40 \text{ nm} \leq tnD50 \leq 8000 \text{ nm}$; $100 \text{ nm} \leq tnD50 \leq 6000 \text{ nm}$; $150 \text{ nm} \leq tnD50 \leq 4500 \text{ nm}$; $180 \text{ nm} \leq tnD50 \leq 4000 \text{ nm}$; $200 \text{ nm} \leq tnD50 \leq 2000 \text{ nm}$; $250 \text{ nm} \leq tnD50 \leq 1500 \text{ nm}$; $280 \text{ nm} \leq tnD50 \leq 1000 \text{ nm}$; $310 \text{ nm} \leq tnD50 \leq 900 \text{ nm}$; or $350 \text{ nm} \leq tnD50 \leq 800 \text{ nm}$.

When the particle diameter of the silicon active material is sD50, and the particle diameter of the niobium-titanium oxide is tnD50, the following condition is satisfied: $0.01 \leq tnD50/sD50 \leq 20.0$. The niobium-titanium oxide and the silicon active material with proper particle diameter ratio are selected, which is favorable for enhancing the density and uniformity of the composition, and the transfer performance and the stability of ions can be effectively improved. Moreover, the following conditions can be satisfied: $0.03 \leq tnD50/sD50 \leq 18.0$; $0.05 \leq tnD50/sD50 \leq 15.0$; $0.08 \leq tnD50/sD50 \leq 12.0$; $0.10 \leq tnD50/sD50 \leq 10.0$; $0.11 \leq tnD50/sD50 \leq 9.0$; or $0.12 \leq tnD50/sD50 \leq 8.0$.

When the weight ratio of the niobium-titanium oxide in the active composition is Ptn, the weight ratio of the silicon active material in the active composition is Ps, and a weight ratio of the carbon active material in the active composition is Pc, the following condition is satisfied: $0.01 \leq Ptn/(Ps+Pc) \leq 25.0$. The weight ratio of the niobium-titanium oxide and the carbon group material in the composition is adjusted, which is favorable for enhancing the capacity of the battery. Moreover, the following conditions can be satisfied: $0.05 \leq Ptn/(Ps+Pc) \leq 22.0$; $0.1 \leq Ptn/(Ps+Pc) \leq 20.0$; $0.2 \leq Ptn/(Ps+Pc) \leq 18.0$; $1.0 \leq Ptn/(Ps+Pc) \leq 16.0$; or $5.0 \leq Ptn/(Ps+Pc) \leq 15.0$.

According to the present disclosure, the carbon active material can be graphite, graphene, carbon microbeads, hard carbon, soft carbon, KS6, SFG6, acetylene black, ketjenblack, carbon black, Super P or carbon nanotube (CNT).

According to the present disclosure, the carbon material can be graphite, carbon microbeads, carbon fibers, hard carbon, soft carbon, KS6, SFG6, graphene, acetylene black, ketjenblack, carbon black or carbon nanotube.

According to the present disclosure, the adhesive can be poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), poly(1,1,2,2-tetrafluoroethylene) (PTFE), ethylene propylene diene monomer (EPDM), hypalon polyethlene rubber (CSM) or alginic acid made of mono alduronic acid by linear polymerization.

According to the present disclosure, the conductive agent can be graphite, KS6, SFG6, graphene, acetylene black, ketjenblack, carbon black, super P, carbon nanotube, carbon microbeads, carbon fibers, hard carbon, soft carbon, aluminium, nickel, titanium dioxide, potassium hexatitanate (PHT) or the combination thereof.

According to the present disclosure, the additives can be carbonate ester compounds, lactone cyclic esters, cyclic compounds with ether groups, aromatic compounds, phosphorus compounds, boron compounds, inorganic oxides or the combination thereof. It is favorable for improving the efficacy of the battery by adding proper amount of additives. For example, the SEI membrane composition is improved, the efficacy under high temperature and high voltage is enhanced, the ion transportation ability is enhanced, the impedance of the electrolyte is reduced, the stability of cycles is improved, the integrity of the cathode and anode materials is maintained, and the electrochemical stability is enhanced.

According to the present disclosure, the anode material can be the niobium-titanium oxide, the silicon active material, the carbon active material, the carbon material, compounds including lithium metal, oxides including lithium metal ($Li_4Ti_5O_{12}$), lithium metal or the combination thereof.

According to the present disclosure, the metal salts can include lithium inorganic acid salts, such as $LiPF_6$,

$LiBF_4$, $LiSbF_6$, $LiAsF_6$, $LiClO_4$, $LiC_4BO_8$, LiTFSI, LiFSI, $LiNO_3$ or $LiGaCl_4$, lithium sulfonate salts with fluorine, such as $LiCF_3SO_3$, $LiN(C_2F_5SO_2)_2$, $LiN(CF_3SO_2)_2$ or $LiC(CF_3SO_2)_3$, $LiBF_2(C_2O_4)$ (LiDFOB), $LiB(C_2O_4)_2$ (LiBOB) or the combination thereof. The aforementioned metal salts can have various oxidation states.

According to the present disclosure, the cathode material can include lithium or a lithium composite metal oxide with at least one metal, such as $LiFePO_4$, $LiMnO_2$, $LiMn_2O_4$, $LiCoO_2$, $LiNiO_2$, $LiNiCoO_2$, $LiNiMnO_4$, $LiCoMnO_2$, $LiCoMnO_4$, $LiNiCoMnO_2$, $LiNiCoMnO_4$ or the combination thereof. The aforementioned lithium composite metal oxide can have various oxidation states.

According to the present disclosure, the electrolyte can be combinations of metal salts, additives and organic solvents. The composition ratio of the organic solvents can be larger than the composition ratio of the additives. The condition of the electrolyte can be liquid, gel or solid. The additives and the organic solvents of the electrolyte can be physically mixed, or at least one of the following additives and the organic solvent monomers can be selected as a precursor for polymerization.

According to the present disclosure, the organic solvents can be carbonate esters, carboxylate esters, ethers, sulfides or the combination thereof. The aforementioned organic solvents can also be used as the additives.

According to the present disclosure, the structure of the organic solvents can include polymerizable olefin groups, which can be the monomers of the precursor of the second structure. For example, it can be 2H-1,3-dioxol-2-one (vinylene carbonate; VC), 4-vinyl-1,3-dioxolan-2-one (vinylethylene carbonate; VEC), 1,3-dithiole-2-thione (vinylene trithiocarbonate), 2,5-dihydrothiophene- 1,1-dioxide, 1-ethenylsulfonylethene, prop-1-ene-1,3-sultone, cyclic additives with ether groups or additives of aromatic compounds.

According to the present disclosure, the organic solvents of the carbonate esters can be a compound in which the hydrogen atoms of the hydroxyl group in the carbonic acid are partially or wholly substituted by alkyl groups. It can be divided into the cyclic carbonate esters and the linear carbonate esters. The linear carbonate esters can include: dimethyl carbonate (DMC), diethyl carbonate (DEC), dipropyl carbonate (DPC), ethyl methyl carbonate (EMC), methyl propyl carbonate (MPC), ethyl propyl carbonate (EPC), methyl 2,2,2-trifluoroethyl carbonate (FEMC). The cyclic carbonate esters can include: 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl- 1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3- dioxolan-2-one (difluoroethylene carbonate; DFEC), 1,3-dithiole-2-thione (vinylene trithiocarbonate) or the combination thereof.

According to the present disclosure, the organic solvents of the carboxylate esters can be manufactured by the esterification of alcohols and carboxyl acids. It can be methyl acetate, ethyl acetate, propyl acetate, methyl propionate, ethyl propionate, propyl propionate, methyl butyrate, ethyl butyrate, lactone or the combination thereof. The lactone can further include 1-oxacycloalkan-2-one structure, which means a compound having hydroxyl groups and carboxyl acids, and the monomers of cyclic carboxylate esters are formed by the intramolecular condensation. There can be various combinations according to the positions of the hydroxyl groups for forming a ring and the number of carbon atoms in the ring, which can include: oxiran-2-one (α-acetolactone), oxetan-2-one (β-propiolactone), oxolan-2-one (γ-butyrolactone), 5-methyloxolan-2-one (γ-valerolactone), oxan-2-on (a-valerolactone), 5-ethyloxolan-2-one (γ-caprolactone), oxepan-2-one (ε-caprolactone), D-glucono-1,5-lactone (δ-gluconolactone) or the combination thereof.

According to the present disclosure, the organic solvents of the ethers can be oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG) or the combination thereof.

According to the present disclosure, the organic solvents of the sulfides can be compounds with sulfone group (-(O=)S(=O)-) or compounds with sulfonate group ($-SO_2O^-$). The compounds with sulfone group can include: 2,5-dihydrothiophene-1,1-dioxide, 1-ethenylsulfonylethene. The compounds with sulfonate group can be divided into mesylate ($CH_3SO_2O^-$), trifluoromethanesulfonate ($CF_3SO_2O^-$), p-toluenesulfonyl group (Tosyl), which can include 1-methylsulfonyloxyethane, methyl 4-methylbenzenesulfonate, oxathiolane 2,2-dione, prop-1-ene-1,3-sultone, 1,3,2-dioxathiane 2,2-dioxide or the combination thereof.

According to the present disclosure, the lactone cyclic ester can be two compounds, which are the same as or different from each other, both include hydroxy acid, and form polycyclic diester monomers by esterification condensation. It can include: 1,4-dioxane-2,5-dione (glycolide), 3,6-dimethyl-1,4-dioxane-2,5-dione (lactide) or the combination thereof. According to the stereoisomerisms formed from different orientations of the atoms in the space, the 3,6-dimethyl-1,4-dioxane-2,5-dione can be further divided into (R,R)-3,6-dimethyl-1,4-dioxane-2,5-dione (LL-lactide), (S,S)-3,6-dimethyl-1,4-dioxane-2,5-dione (DD-lactide), or (meso)-3,6-dimethyl-1,4-dioxane-2,5-dione (DL-lactide). Moreover, it can be a carboxylic acid compound with hydroxyl group, which can directly form the polymer by copolymerization without ring-opening reaction. It can include: 2-hydroxyacetic acid (glycolic acid), 3-hydroxypropanoic acid (lactic acid), 4-hydroxybutanoic acid, 5-hydroxyvaleric acid or the combination thereof.

According to the present disclosure, the additives of the cyclic compounds with ether groups can be crown ether. The crown ether has vinyloxy groups ($-CH_2CH_2O-$) as the main repeating unit, which can include: 1,4,7-trioxonane (9-crown-3), 1,4,7,10-tetraoxacyclododecane (12-crown-4), 1,4,7,10,13-pentaoxacyclopentadecane (15-crown-5), 1,4,7,10,13,16- hexaoxacyclooctadecane (18-crown-6), 1,4,7,10,13,16,19-heptaoxacycloheneicosane (21-crown-7), 6,7,9,10,17,18,20,21-octahydrodibenzo[b,k][1,4,7,10,13,16]hexaoxacyclooctadecine (dibenzo-18- crown-6), 1,4,10,13-tetraoxa-7,16-diazacyclooctadecane (diaza-18-crown-6) or the combination thereof.

According to the present disclosure, the additives of the aromatic compounds can include methoxybenzene, 1-ethynyl-4-methoxybenzene, tert-butylbenzene, fluorobenzene, 1,2-difluorobenzene, 1,1'-oxydibenzene, 1,4-diphenylbenzene, 2-fluoro-4-(2-methyl-2-propanyl)aniline, N-[3-(trimethoxysilyl)propyl]aniline or the combination thereof.

According to the present disclosure, the additives of the phosphorus compounds can be tris(trimethylsilyl) phosphite (TMSPi), tris(2,2,2-trifluoroethyl) phosphite, triphenyl phosphite, 1,3,5,2,4,6-triazatriphosphorine-2-ethoxy-2,4,4,6,6-pentafluoro-2,2,4,4,6,6-hexahydro or the combination thereof.

According to the present disclosure, the additives of the boron compounds can be trimethyl borate, tris(trimethylsilyl) borate, 2,4,6-trimethyl-1,3,5,2,4,6-trioxatriborinane or the combination thereof.

According to the present disclosure, the additives of the inorganic oxides can be composite materials such as LiLaZrO, LiLaZrTaO, LiLaTiO, LiPO, LiPOF, LiTiPO, LiAlGeP, LiAlTiPO, LiGePSO, LiSnPSO, PbZrTiO, PbLaZrTiO, or BaTiO. The aforementioned additives of the inorganic oxides can have various oxidation states, or can be $Al_2O_3$, $TiO_2$, $SiO_2$, $SnO_2$, NiO, ZnO, CaO, MgO, $ZrO_2$, $CeO_2$, $Y_2O_3$, etc. The crystallinity of the polymer electrolyte can be reduced, and the ion conductivity and the physical mechanical strength of the electrolyte can be enhanced, which is favorable for increasing the cycle life of the battery.

According to the present disclosure, the separator can be a thin film with porous structure, and can include a single layer or multiple layers of fibers of polyolefins, polyamides, polyesters, such as polyethylene (PE), polypropylene (PP), polyethylene terephthalate (PET), acrylonitrile butadiene styrene copolymer (ABS) or epoxy resin. The surface thereof can include an inorganic ceramic composite film of at least one of $Mg(OH)_2$, MgO, $BaSO_4$, $SnO_2$, NiO, CaO, $Al_2O_3$, ZnO, $SiO_2$, TiOz or the combination thereof. The aforementioned inorganic ceramic composite film can have various oxidation states.

According to the present disclosure, all of the related configurations of the niobium-titanium oxide, the silicon active material and the carbon active material can be further made into electrode pieces according to the related ratios and undergo the charging and discharging test of the battery. According to the present disclosure, only the manufacturing ratios and the charging and discharging test of the battery of part of the related configurations are shown, and it is marked as "-" in the tables when there is no data or it cannot be calculated.

According to the present disclosure, an anode includes the aforementioned composition.

According to the present disclosure, a battery includes the aforementioned anode.

When a maximum among discharge volumetric capacities of a first cycle to a fifteen cycle of the battery with a current of 2C for charging and discharging is C2VMax, the following condition is satisfied: 100 mAh/cm$^3$ ≤ C2VMax ≤ 800 mAh/cm$^3$. The maximum capacity of the first fifteen cycles is measured, which is favorable for ensuring the capacity of the battery after the battery reaches the stable state. Moreover, the following conditions can be satisfied: 120 mAh/cm$^3$ ≤ C2VMax ≤ 750 mAh/cm$^3$; 140 mAh/cm$^3$ ≤ C2VMax ≤ 720 mAh/cm$^3$; 160 mAh/cm$^3$ ≤ C2VMax ≤ 700 mAh/cm$^3$; 180 mAh/cm$^3$ ≤ C2VMax ≤ 680 mAh/cm$^3$; 200 mAh/cm$^3$ ≤ C2VMax ≤ 650 mAh/cm$^3$; 220 mAh/cm$^3$ ≤ C2VMax ≤ 630 mAh/cm$^3$; or 230 mAh/cm$^3$ ≤ C2VMax ≤ 500 mAh/cm$^3$.

When a discharge volumetric capacity of a sixtieth cycle of the battery with the current of 2C for charging and discharging is C2V60, the following condition is satisfied: 100 mAh/cm$^3$ ≤ C2V60 ≤ 800 mAh/cm$^3$. The measured capacity meets high standard after the battery undergoes several cycles, which is favorable for estimating the capacity and performance of the battery. Moreover, the following conditions can be satisfied: 120 mAh/cm$^3$ ≤ C2V60 ≤ 750 mAh/cm$^3$; 140 mAh/cm$^3$ ≤ C2V60 ≤ 720 mAh/cm$^3$; 160 mAh/cm$^3$ ≤ C2V60 ≤ 700 mAh/cm$^3$; 180 mAh/cm$^3$ ≤ C2V60 ≤ 680 mAh/cm$^3$; 200 mAh/cm$^3$ ≤ C2V60 ≤ 650 mAh/cm$^3$; 220 mAh/cm$^3$ ≤ C2V60 ≤ 630 mAh/cm$^3$; or 230 mAh/cm$^3$ ≤ C2V60 ≤ 500 mAh/cm$^3$.

When a discharge volumetric capacity of a fifth cycle of the battery with the current of 2C for charging and discharging is C2V5, and a discharge volumetric capacity of a tenth cycle of the battery with the current of 2C for charging and discharging is C2V10, the following condition is satisfied: 0.70 ≤ C2V10/C2V5. The difference between the capacities of the fifth cycle and the small numbers of cycles of the battery is compared, which is favorable for estimating the durability of the battery. Moreover, the following conditions can be satisfied: 0.75 ≤ C2V10/C2V5 ≤ 1.50; 0.80 ≤ C2V10/C2V5 ≤ 1.30; 0.85 ≤ C2V10/C2V5 ≤ 1.20; 0.90 ≤ C2V10/C2V5 ≤ 1.10; or 0.95 ≤ C2V10/C2V5 ≤ 1.05.

When the discharge volumetric capacity of the fifth cycle of the battery with the current of 2C for charging and discharging is C2V5, and a discharge volumetric capacity of a twentieth cycle of the battery with the current of 2C for charging and discharging is C2V20, the following condition is satisfied: 0.60 ≤ C2V20/C2V5. The difference between the capacities of the fifth cycle and the middle numbers of cycles of the battery is compared, which is favorable for estimating the durability of the battery. Moreover, the following conditions can be satisfied: 0.70 ≤ C2V20/C2V5 ≤ 1.50; 0.75 ≤ C2V20/C2V5 ≤ 1.40; 0.80 ≤ C2V20/C2V5 ≤ 1.30; 0.85 ≤ C2V20/C2V5 ≤ 1.20; 0.90 ≤ C2V20/C2V5 ≤ 1.10; or 0.95 ≤ C2V20/C2V5 ≤ 1.05.

When a total number of Coulombic efficiency greater than 85% and smaller than 110% in the first fifteen cycles of the battery with the current of 2C for charging and discharging is n85C2E15, the following condition is satisfied: $10 \leq$ n85C2E15 $\leq 15$. The Coulombic efficiencies in the early numbers of cycles all meet high standard, which is favorable for reducing the effect of lithium loss on the capacity maintenance ratio. Moreover, the following conditions can be satisfied: $11 \leq$ n85C2E15 $\leq 15$; $12 \leq$ n85C2E15 $\leq 15$; $13 \leq$ n85C2E15 $\leq 15$; or $14 \leq$ n85C2E15 $\leq 15$.

When a total number of Coulombic efficiency greater than 85% and smaller than 110% in first fifty cycles of the battery with the current of 2C for charging and discharging is n85C2E50, the following condition is satisfied: $40 \leq$ n85C2E50 $\leq 50$. The Coulombic efficiencies in the large numbers of cycles all meet high standard, which can be a quantitative indicator of reversibility of the battery. Moreover, the following conditions can be satisfied: $42 \leq$ n85C2E50 $\leq 50$; $44 \leq$ n85C2E50 $\leq 50$; $45 \leq$ n85C2E50 $\leq 50$; $46 \leq$ n85C2E50 $\leq 50$; $47 \leq$ n85C2E50 $\leq 50$; $48 \leq$ n85C2E50 $\leq 50$; or $49 \leq$ n85C2E50 $\leq 50$.

When an average of Coulombic efficiencies in the first fifteen cycles of the battery with the current of 2C for charging and discharging is aC2E15, the following condition is satisfied: $80\% \leq$ aC2E15 $\leq 110\%$. The relatively high average of Coulombic efficiencies is maintained in the early charging and discharging, which is favorable for obtaining high stability of battery in the later cycles. Moreover, the following conditions can be satisfied: $82\% \leq$ aC2E15 $\leq 108\%$; $85\% \leq$ aC2E15 $\leq 105\%$; $87\% \leq$ aC2E15 $\leq 103\%$; $90\% \leq$ aC2E15 $\leq 101\%$; or $92\% \leq$ aC2E15 $\leq 100\%$.

When an average of Coulombic efficiencies in the first fifty cycles of the battery with the current of 2C for charging and discharging is aC2E50, the following condition is satisfied: $75\% \leq$ aC2E50 $\leq 110\%$. The relatively great consistency of discharging capacities and charging capacities in multiple cycles is obtained, and the relatively high average of Coulombic efficiencies is maintained, which is favorable for extending the high performance of the battery. Moreover, the following conditions can be satisfied: $80\% \leq$ aC2E50 $\leq 108\%$; $82\% \leq$ aC2E50 $\leq 106\%$; $85\% \leq$ aC2E50 $\leq 105\%$; $87\% \leq$ aC2E50 $\leq 103\%$; $90\% \leq$ aC2E50 $\leq 101\%$; $91\% \leq$ aC2E50 $\leq 100\%$; or $92\% \leq$ aC2E50 $\leq 98\%$.

When a discharge volumetric capacity of a first cycle of the battery with a current of 1C for charging and discharging is C1V1, and a discharge volumetric capacity of the first cycle of the battery with the current of 2C for charging and discharging is C2V1, the following condition is satisfied: $0.50 \leq$ C2V1/C1V1. The capacities of charging and discharging with a high current and a low current are compared to understand that it is favorable for enhancing the rate performance of the battery when the active composition is taken as the anode active material. Moreover, the following conditions can be satisfied: $0.60 \leq$ C2V1/C1V1 $\leq 1.50$; $0.70 \leq$ C2V1/C1V1 $\leq 1.40$; $0.75 \leq$ C2V1/C1V1 $\leq 1.30$; $0.80 \leq$ C2V1/C1V1 $\leq 1.25$; $0.85 \leq$ C2V1/C1V1 $\leq 1.20$; or $0.90 \leq$ C2V1/C1V1 $\leq 1.18$.

When a maximum among discharge gravimetric capacities of the first cycle to the fifteen cycle of the battery with the current of 2C for charging and discharging is C2GMax, the following condition is satisfied: 100 mAh/g $\leq$ C2GMax $\leq$ 800 mAh/g. The maximum capacity of the first fifteen cycles is measured, which is favorable for observing the capacity of the battery after the battery reaches the stable state. Moreover, the following conditions can be satisfied: 120 mAh/g $\leq$ C2GMax $\leq$ 750 mAh/g; 140 mAh/g $\leq$ C2GMax $\leq$ 700 mAh/g; 160 mAh/g $\leq$ C2GMax $\leq$ 680 mAh/g; 180 mAh/g $\leq$ C2GMax $\leq$ 650 mAh/g; 200 mAh/g $\leq$ C2GMax $\leq$ 630 mAh/g; or 250 mAh/g $\leq$ C2GMax $\leq$ 600 mAh/g.

When a discharge gravimetric capacity of the sixtieth cycle of the battery with the current of 2C for charging and discharging is C2G60, the following condition is satisfied: 100 mAh/g $\leq$ C2G60 $\leq$ 800 mAh/g. The measured capacity meets high standard after the battery undergoes several cycles, which is favorable for being an important indicator for estimating the capacity and performance of the battery. Moreover, the following conditions can be satisfied: 110 mAh/g $\leq$ C2G60 $\leq$ 750 mAh/g; 120 mAh/g $\leq$ C2G60 $\leq$ 700 mAh/g; 130 mAh/g $\leq$ C2G60 $\leq$ 680 mAh/g; 140 mAh/g $\leq$ C2G60 $\leq$ 650 mAh/g; 150 mAh/g $\leq$ C2G60 $\leq$ 630 mAh/g; or 180 mAh/g $\leq$ C2G60 $\leq$ 600 mAh/g.

When the discharge volumetric capacity of the fifth cycle of the battery with the current of 2C for charging and discharging is C2V5, and the discharge volumetric capacity of the sixtieth cycle of the battery with the current of 2C for charging and discharging is C2V60, the following condition is satisfied: $0.50 \leq$ C2V60/C2V5. The difference between the capacities of the fifth cycle and the large numbers of cycles of the battery is compared, which is favorable for being a basis for estimating the battery life. Moreover, the following conditions can be satisfied: $0.60 \leq$ C2V60/C2V5 $\leq 1.50$; $0.70 \leq$ C2V60/C2V5 $\leq 1.40$; $0.75 \leq$ C2V60/C2V5 $\leq 1.30$; $0.80 \leq$ C2V60/C2V5 $\leq 1.20$; $0.85 \leq$ C2V60/C2V5 $\leq 1.15$; $0.90 \leq$ C2V60/C2V5 $\leq 1.10$; or $0.95 \leq$ C2V60/C2V5 $\leq 1.05$.

When a total number of Coulombic efficiency greater than 90% and smaller than 110% in the first fifteen cycles of the battery with the current of 2C for charging and discharging is n90C2E15, the following condition is satisfied: $8 \leq$ n90C2E15 $\leq 15$. The Coulombic efficiencies in the early numbers of cycles all meet high standard, which is favorable for maintaining the stability of battery in the later cycles. Moreover, the following conditions can be satisfied: $9 \leq$ n90C2E15 $\leq 15$; $10 \leq$ n90C2E15 $\leq 15$; $11 \leq$ n90C2E15 $\leq 15$; $12 \leq$ n90C2E15 $\leq 15$; $13 \leq$ n90C2E15 $\leq 15$; or $14 \leq$ n90C2E15 $\leq 15$.

When a total number of Coulombic efficiency greater than 90% and smaller than 110% in the first fifty cycles of the battery with the current of 2C for charging and discharging is n90C2E50, the following condition is satisfied: $30 \leq$ n90C2E50 $\leq 50$. The Coulombic efficiencies in the large numbers of cycles all meet high standard, and the balance of lithium ions intercalating into and deintercalating out of the active material can be maintained, which is favorable for extending the battery life. Moreover, the following conditions can be satisfied: $33 \leq n90C2E50 \leq 50$; $35 \leq n90C2E50 \leq 50$; $38 \leq n90C2E50 \leq 50$; $40 \leq n90C2E50 \leq 50$; $41 \leq n90C2E50 \leq 49$; $42 \leq n90C2E50 \leq 48$; or $43 \leq n90C2E50 \leq 47$.

When the discharge volumetric capacity of the first cycle of the battery with the current of 2C for charging and discharging is C2V1, and a discharge volumetric capacity of a first cycle of the battery with a current of 4C for charging and discharging is C4V1, the following condition is satisfied: $0.50 \leq C4V1/C2V1$. By undergoing the charging and discharging test of the battery with high current, it is understood that the high chemical stability and high ion transferring ability are obtained when the active composition is taken as the anode active material, which is favorable for improving the safety as the battery is quickly charged. Moreover, the following conditions can be satisfied: $0.60 \leq C4V1/C2V1 \leq 1.50$; $0.70 \leq C4V1/C2V1 \leq 1.40$; $0.75 \leq C4V1/C2V1 \leq 1.30$; $0.80 \leq C4V1/C2V1 \leq 1.20$; $0.85 \leq C4V1/C2V1 \leq 1.15$; or $0.90 \leq C4V1/C2V1 \leq 1.10$.

According to the present disclosure, the cycles of the battery are defined as the battery is in a condition of a commercial product, and the first test under the aforementioned condition is taken as the first cycle of the present disclosure. One complete discharging and charging test is taken as one cycle, and the number of the cycles is accumulated accordingly.

According to the present disclosure, the capacity can be obtained by measuring the charging capacity of the battery and the discharging capacity of the battery. The methods for calculating the capacity can be divided into the volumetric capacity (mAh/cm$^3$) and the gravimetric capacity (mAh/g). The volumetric capacity means the capacity provided by the electrode piece per cubic centimeter in a battery, and the volume of the current collector should be deducted as calculating the volumetric capacity. The gravimetric capacity means the capacity provided by the electrode piece per gram in a battery, and the weight of the current collector should be deducted as calculating the gravimetric capacity. The electrode piece can be the cathode piece or the anode piece. The current collector is a substrate formed by a metal foil, such as aluminum foil or copper foil.

According to the present disclosure, the C-rate (C) can represent the current of the battery being fully discharged for one hour. C can be the unit of the charging and discharging current of the battery.

According to the present disclosure, the voltage range to measure the battery can be chosen according to the redox potential of the materials of the cathode and anode to obtain a relatively proper voltage range. The voltage range can be chosen as 0 V - 5.0 V, which is preferably chosen as 2.5 V - 4.5 V.

According to the present disclosure, the discharge volumetric capacity can be represent as CiVj, and the discharge gravimetric capacity can be represent as CiGj, wherein i represents the current for charging and discharging in the unit of C, and j represents the number of cycle of charging and discharging of the battery.

According to the present disclosure, the total number of Coulombic efficiency satisfying a certain percentage range can be represented as nxCyEz, wherein x represents the lower limit of the certain percentage range, y represents the current for charging and discharging in the unit of C, and z represents the stopped number of cycle of charging and discharging of the battery.

According to the present disclosure, the average of Coulombic efficiencies can be represented as aCyEz, wherein y represents the current for charging and discharging in the unit of C, and z represents the stopped number of cycle of charging and discharging of the battery.

According to the present disclosure, when the discharge volumetric capacity of the fifth cycle of the battery with the current of 2C for charging and discharging is C2V5, and a discharge volumetric capacity of a five-hundredth cycle of the battery with the current of 2C for charging and discharging is C2V500, the following condition is satisfied: $0.50 \leq C2V500/C2V5 \leq 1.50$. The difference between the capacities of the fifth cycle and the large numbers of cycles of the battery is compared, which is favorable for being a basis for estimating the battery life. Moreover, the following conditions can be satisfied: $0.60 \leq C2V500/C2V5 \leq 1.30$; $0.70 \leq C2V500/C2V5 \leq 1.10$; $0.80 \leq C2V500/C2V5 \leq 1.00$; or $0.85 \leq C2V500/C2V5 \leq 0.95$.

According to the present disclosure, when a discharge volumetric capacity of a fifth cycle of the battery with the current of 4C for charging and discharging is C4V5, and a discharge volumetric capacity of a five-hundredth cycle of the battery with the current of 4C for charging and discharging is C4V500, the following condition is satisfied: $0.40 \leq C4V500/C4V5 \leq 1.50$. The difference between the capacities of the fifth cycle and the large numbers of cycles of the battery being tested with the relatively high current is compared, which is favorable for estimating the capacity and performance of the battery. Moreover, the following conditions can be satisfied: $0.50 \leq C4V500/C4V5 \leq 1.40$; $0.60 \leq C4V500/C4V5 \leq 1.30$; $0.70 \leq C4V500/C4V5 \leq 1.20$; $0.80 \leq C4V500/C4V5 \leq 1.00$; or $0.85 \leq C4V500/C4V5 \leq 0.95$.

According to the present disclosure, when a discharge volumetric capacity of a fifth cycle of the battery with a current of 10C for charging and discharging is C10V5, and a discharge volumetric capacity of a five-hundredth cycle of the battery with the current of 10C for charging and discharging is C10V500, the following condition is satisfied: $0.30 \leq C10V500/C10V5 \leq 1.50$. The difference between the capacities of the fifth cycle and the large numbers of cycles of the battery being tested with the high current is compared, which is favorable for estimating the capacity and performance of the battery. Moreover, the following conditions can be satisfied: $0.40 \leq C10V500/C10V5 \leq 1.40$; $0.50 \leq C10V500/C10V5 \leq 1.30$; $0.60 \leq C10V500/C10V5 \leq 1.20$; $0.70 \leq C10V500/C10V5 \leq 1.10$; $0.80 \leq C10V500/C10V5 \leq 1.00$; or $0.85 \leq$

C10V500/C10V5 ≤ 0.95.

According to the present disclosure, when a total number of Coulombic efficiency greater than 85% and smaller than 110% in first five hundred cycles of the battery with the current of 2C for charging and discharging is n85C2E500, the following condition is satisfied: 400 ≤ n85C2E500 ≤ 500. The Coulombic efficiencies in the large numbers of cycles all meet high standard, which can be a quantitative indicator of reversibility of the battery. Moreover, the following conditions can be satisfied: 420 ≤ n85C2E500 ≤ 495; 440 ≤ n85C2E500 ≤ 490; 450 ≤ n85C2E500 ≤ 485; or 460 ≤ n85C2E500 ≤ 480.

According to the present disclosure, when a total number of Coulombic efficiency greater than 90% and smaller than 110% in the first five hundred cycles of the battery with the current of 2C for charging and discharging is n90C2E500, the following condition is satisfied: 350 ≤ n90C2E500 ≤ 500. The Coulombic efficiencies in the large numbers of cycles all meet high standard, which can be a quantitative indicator of reversibility of the battery. Moreover, the following conditions can be satisfied: 370 ≤ n90C2E500 ≤ 495; 385 ≤ n90C2E500 ≤ 490; 400 ≤ n90C2E500 ≤ 485; or 420 ≤ n90C2E500 ≤ 480.

According to the present disclosure, when a total number of Coulombic efficiency greater than 85% and smaller than 110% in first five hundred cycles of the battery with the current of 4C for charging and discharging is n85C4E500, the following condition is satisfied: 350 ≤ n85C4E500 ≤ 500. The Coulombic efficiencies in the large numbers of cycles as charging and discharging with the relatively high current all meet high standard, which can be a quantitative indicator of reversibility of the battery. Moreover, the following conditions can be satisfied: 370 ≤ n85C4E500 ≤ 495; 385 ≤ n85C4E500 ≤ 490; 400 ≤ n85C4E500 ≤ 485; or 420 ≤ n85C4E500 ≤ 480.

According to the present disclosure, when a total number of Coulombic efficiency greater than 90% and smaller than 110% in the first five hundred cycles of the battery with the current of 4C for charging and discharging is n90C4E500, the following condition is satisfied: 350 ≤ n90C4E500 ≤ 500. The Coulombic efficiencies in the large numbers of cycles as charging and discharging with the relatively high current all meet high standard, which can be a quantitative indicator of reversibility of the battery. Moreover, the following conditions can be satisfied: 370 ≤ n90C4E500 ≤ 495; 385 ≤ n90C4E500 ≤ 490; 400 ≤ n90C4E500 ≤ 485; or 420 ≤ n90C4E500 ≤ 480.

According to the present disclosure, when a total number of Coulombic efficiency greater than 85% and smaller than 110% in first five hundred cycles of the battery with the current of 10C for charging and discharging is n85C10E500, the following condition is satisfied: 350 ≤ n85C10E500 ≤ 500. The Coulombic efficiencies in the large numbers of cycles as charging and discharging with the high current all meet high standard, which can be a quantitative indicator of reversibility of the battery. Moreover, the following conditions can be satisfied: 370 ≤ n85C10E500 ≤ 495; 385 ≤ n85C10E500 ≤ 490; 400 ≤ n85C10E500 ≤ 485; or 420 ≤ n85C10E500 ≤ 480.

According to the present disclosure, when a total number of Coulombic efficiency greater than 90% and smaller than 110% in the first five hundred cycles of the battery with the current of 10C for charging and discharging is n90C10E500, the following condition is satisfied: 350 ≤ n90C10E500 ≤ 500. The Coulombic efficiencies in the large numbers of cycles as charging and discharging with the high current all meet high standard, which can be a quantitative indicator of reversibility of the battery. Moreover, the following conditions can be satisfied: 370 ≤ n90C10E500 ≤ 495; 385 ≤ n90C10E500 ≤ 490; 400 ≤ n90C10E500 ≤ 485; or 420 ≤ n90C10E500 ≤ 480.

According to the present disclosure, when an average of Coulombic efficiencies in the first five hundred cycles of the battery with the current of 2C for charging and discharging is aC2E500, the following condition is satisfied: 80% ≤ aC2E500 ≤ 110%. The relatively great consistency of discharging capacities and charging capacities in multiple cycles is obtained, the relatively high average of Coulombic efficiencies is maintained, which is favorable for extending the high performance of the battery. Moreover, the following conditions can be satisfied: 85% ≤ aC2E500 ≤ 105%; or 90% ≤ aC2E500 ≤ 100%.

According to the present disclosure, when an average of Coulombic efficiencies in the first five hundred cycles of the battery with the current of 4C for charging and discharging is aC4E500, the following condition is satisfied: 80% ≤ aC4E500 ≤ 110%. The relatively great consistency of discharging capacities and charging capacities in multiple cycles is obtained by tested charging and discharging with the relatively high current, and the relatively high average of Coulombic efficiencies is maintained, which is favorable for extending the high performance of the battery. Moreover, the following conditions can be satisfied: 85% ≤ aC4E500 ≤ 105%; or 90% ≤ aC4E500 ≤ 100%.

According to the present disclosure, when an average of Coulombic efficiencies in the first five hundred cycles of the battery with the current of 10C for charging and discharging is aC10E500, the following condition is satisfied: 80% ≤ aC10E500 ≤ 110%. The relatively great consistency of discharging capacities and charging capacities in multiple cycles is obtained by tested charging and discharging with the high current, and the relatively high average of Coulombic efficiencies is maintained, which is favorable for extending the high performance of the battery. Moreover, the following conditions can be satisfied: 85% ≤ aC10E500 ≤ 105%; or 90% ≤ aC10E500 ≤ 100%.

According to the present disclosure, the volumetric energy density can be calculated according to the following equation:

$$\text{Volumetric energy density (Wh/L)} = \text{discharge capacity (Ah)} \times \text{nominal voltage (V) / total}$$

$$\text{volume of battery (L)}.$$

According to the present disclosure, the gravimetric energy density can be calculated according to the following equation:

$$\text{Gravimetric energy density (Wh/kg)} = \text{discharge capacity (Ah)} \times \text{nominal voltage (V) / total}$$

$$\text{weight of battery (kg)}.$$

According to the present disclosure, when a discharge volumetric energy density of a fifth cycle of the battery is vE5, the following condition can be satisfied: 500 Wh/L $\leq$ vE5 $\leq$ 900 Wh/L. The discharge volumetric energy density of the battery meets high standard, which is favorable for multiple applications. Moreover, the following conditions can be satisfied: 550 Wh/L $\leq$ vE5 $\leq$ 850 Wh/L; or 600 Wh/L $\leq$ vE5 $\leq$ 800 Wh/L.

According to the present disclosure, when a discharge gravimetric energy density of the fifth cycle of the battery is gE5, the following condition can be satisfied: 180 Wh/kg $\leq$ gE5 $\leq$ 450 Wh/kg. The discharge gravimetric energy density of the battery meets high standard, which is favorable for multiple applications. Moreover, the following conditions can be satisfied: 200 Wh/kg $\leq$ gE5 $\leq$ 400 Wh/kg; or 250 Wh/kg $\leq$ gE5 $\leq$ 350 Wh/kg.

According to the present disclosure, the diameter of particles and the diameter distribution thereof can be obtained by measuring the amplitude corresponding to the time of the scattering light from the particles undergoing Brownian motion by dynamic light scattering. The diameter of particles can be calculated by the Stokes-Einstein equation, which is shown as follows:

$$D = kT/(3\pi\eta D_f);$$

wherein D is the diameter of the particles (its unit is m), k is Boltzmann constant (its unit is J/K), T is the absolute temperature (its unit is K), $\eta$ is the viscosity of the solvent (its unit is kg$\times$m$^{-1}\times$s$^{-1}$), and Dr is the diffusion coefficient (its unit is m$^2\times$s$^{-1}$).

According to the present disclosure, the diameter distribution is the distribution of diameter of the particles with different sizes in the samples to be tested. According to the ratio of the distribution of each diameter and the accumulated percentage based on volume, the function of cumulative particle size distribution can be obtained. For example: a diameter as the percentage of cumulative particle size distribution reaching 50% is D50, which represents that there are 50% particles in the sample to be tested having the diameter less than the diameter of D50. D10, D90 have the similar definitions. D50 is the standard of estimating the particle diameter if there is no special indication.

According to the present disclosure, the diameter of the core can be measured from analyzing the diffraction peak {111} of the silicon crystal grain by the X-ray diffractometer according to the Scherrer equation:

$$L = (\kappa\times\lambda)/(\beta\cos(\theta/2));$$

wherein L is the diameter of the silicon crystal grain (its unit is nm); $\kappa$ is the shape factor, which is about 0.9 but changes depending on the actual shape of the crystal grain; $\beta$ is the full width at half maximum of the diffraction peak {111} (its unit is radian); and $\theta$ is the position of the diffraction peak {111}.

According to the present disclosure, the anode piece can be manufactured by the methods of coating on single layer or double layers, vacuum coating or composite structures.

According to the present disclosure, the roughness is an arithmetical mean height of the surface of the surface characteristic parameter Sa ($\mu$m) according to ISO 251781. The region for measuring the roughness is set for an area being at least larger than 10000 $\mu$m$^2$. The average height of the surface is the arithmetical mean of the height of each point Z(x,y) in the region. Sa is the average value of the absolute values of the difference between each point Z(x,y) in the region and the average height of the surface according to the following equation:

$$Sa = \frac{1}{A} \iint_A |Z(x,y) - h| dx dy$$

;

wherein A is the area of the region ($\mu$m$^2$), and h is the average height of the surface ($\mu$m).

According to the present disclosure, the conductivity is measured by the electrochemical impedance spectroscopy (EIS) method. An alternating current of 1 Hz to 100 Hz and the amplitude of 50 mV is applied to the polymer or the electrolyte. The resistance value is measured, and the conductivity is calculated by the following equation:

$$Ci = (1/R) \times (L/A);$$

wherein Ci (S$\times$cm$^{-1}$) is the conductivity, R ($\Omega$) is the resistance value, L (cm) is the distance between two electrodes, and A (cm$^2$) is the sectional area of the sample to be tested and the electrodes, wherein (L/A) can be defined as the conductivity parameter (cm$^{-1}$).

According to the present disclosure, the electrochemical stability is measured by linear sweep voltammetry (LSV). The scanning speed is 0.1 V/s and it is repeatedly tested under the condition of the Li/Li$^+$ relative voltage between -5 V to 5 V, and the results of the relationship changes between the current and potential corresponding thereto can be obtained.

According to the present disclosure, the battery assembly can include a battery case, a spring, a spacer, a lid, a tab, a cap.

According to the present disclosure, the battery can be a primary cell or a secondary cell. The electrochemical carrier of the primary cell or the secondary cell can be at least one of a button type carrier, a winding type carrier or a stacking type carrier. It can be applied to the portable electronic products, such as digital cameras, mobile phones, notebook computers, console handles and other devices which need to be light and thin, or applied to the power storage industries with large-scale, such as light electric cars and electric cars.

According to the above description of the present disclosure, the following specific embodiments are provided for further explanation.

<Comparative Embodiment>

The comparative embodiment provides a battery, and an anode thereof includes an active composition. The active composition includes a silicon active material and a carbon active material. When a weight ratio of the silicon active material in the active composition is Ps, and a weight ratio of the carbon active material in the active composition is Pc, the following conditions are satisfied: Ps = 10.0%; and Pc = 90.0%.

When a particle diameter of the silicon active material is sD50, the following condition is satisfied: sD50 = 80 nm.

When a maximum among discharge volumetric capacities of a first cycle to a fifteen cycle of the battery of the comparative embodiment with a current of 2C for charging and discharging is C2VMax, and a discharge volumetric capacity of a sixtieth cycle of the battery of the comparative embodiment with the current of 2C for charging and discharging is C2V60, the following conditions are satisfied: C2VMax = 163.3 mAh/cm$^3$; and C2V60 = 0.5 mAh/cm$^3$.

When a discharge volumetric capacity of a fifth cycle of the battery of the comparative embodiment with the current of 2C for charging and discharging is C2V5, a discharge volumetric capacity of a tenth cycle of the battery of the comparative embodiment with the current of 2C for charging and discharging is C2V10, and a discharge volumetric capacity of a twentieth cycle of the battery of the comparative embodiment with the current of 2C for charging and discharging is C2V20, the following conditions are satisfied: C2V10/C2V5 = 0.98; and C2V20/C2V5 = 0.11.

When a total number of Coulombic efficiency greater than 85% and smaller than 110% in first fifteen cycles of the battery of the comparative embodiment with the current of 2C for charging and discharging is n85C2E15, and a total number of Coulombic efficiency greater than 85% and smaller than 110% in first fifty cycles of the battery of the comparative embodiment with the current of 2C for charging and discharging is n85C2E50, the following conditions are satisfied: n85C2E15 = 10; and n85C2E50 = 17.

When an average of Coulombic efficiencies in the first fifteen cycles of the battery of the comparative embodiment with the current of 2C for charging and discharging is aC2E15, and an average of Coulombic efficiencies in the first fifty cycles of the battery of the comparative embodiment with the current of 2C for charging and discharging is aC2E50, the following conditions are satisfied: aC2E15 = 85.4%; and aC2E50 = 109.1%.

When a discharge volumetric capacity of a first cycle of the battery of the comparative embodiment with a current of 1C for charging and discharging is C1V1, and a discharge volumetric capacity of the first cycle of the battery of the comparative embodiment with the current of 2C for charging and discharging is C2V1, the following condition is satisfied: C2V1/C1V1 = 0.61.

When a maximum among discharge gravimetric capacities of the first cycle to the fifteen cycle of the battery of the comparative embodiment with the current of 2C for charging and discharging is C2GMax, and a discharge gravimetric capacity of the sixtieth cycle of the battery of the comparative embodiment with the current of 2C for charging and discharging is C2G60, the following conditions are satisfied: C2GMax = 335.2 mAh/g; and C2G60 = 1.1 mAh/g.

When the discharge volumetric capacity of the fifth cycle of the battery of the comparative embodiment with the current of 2C for charging and discharging is C2V5, and the discharge volumetric capacity of the sixtieth cycle of the battery of the comparative embodiment with the current of 2C for charging and discharging is C2V60, the following condition is satisfied: C2V60/C2V5 = 0.01.

When a total number of Coulombic efficiency greater than 90% and smaller than 110% in the first fifteen cycles of the battery of the comparative embodiment with the current of 2C for charging and discharging is n90C2E15, a total number of Coulombic efficiency greater than 90% and smaller than 110% in the first fifty cycles of the battery of the comparative embodiment with the current of 2C for charging and discharging is n90C2E50, the following conditions are satisfied: n90C2E15 = 1; and n90C2E50 = 8.

When the discharge volumetric capacity of the first cycle of the battery of the comparative embodiment with the current of 2C for charging and discharging is C2V1, and a discharge volumetric capacity of a first cycle of the battery of the comparative embodiment with a current of 4C for charging and discharging is C4V1, the following condition is satisfied: C4V1/C2V1 = 0.97.

The detailed data of the battery of the comparative embodiment are shown in Table 1 to Table 3 below.

<1st Embodiment>

The 1st embodiment provides a battery, and an anode thereof includes an active composition. The active composition includes a niobium-titanium oxide, a silicon active material and a carbon active material. When a weight ratio of the niobium-titanium oxide in the active composition is Ptn, a weight ratio of the silicon active material in the active composition is Ps, and a weight ratio of the carbon active material in the active composition is Pc, the following conditions are satisfied: Ptn = 22.5%; Ps = 10.0%; Pc = 67.5%; Ptn/Ps = 2.3; and Ptn/(Ps+Pc) = 0.3.

When a particle diameter of the silicon active material is sD50, and a particle diameter of the niobium-titanium oxide is tnD50, the following conditions are satisfied: sD50 = 80 nm; tnD50 = 271 nm; and tnD50/sD50 = 3.4.

The detailed data of the battery of the 1st embodiment are shown in Table 1 to Table 3 below. The definitions of these parameters shown in Table 1 to Table 3 are the same as those stated in the comparative embodiment with corresponding values for the 1st embodiment, so an explanation in this regard will not be provided here again.

<2nd Embodiment>

The 2nd embodiment provides a battery, and an anode thereof includes an active composition. The active composition includes a niobium-titanium oxide, a silicon active material and a carbon active material. When a weight ratio of the niobium-titanium oxide in the active composition is Ptn, a weight ratio of the silicon active material in the active composition is Ps, and a weight ratio of the carbon active material in the active composition is Pc, the following conditions are satisfied: Ptn = 67.5%; Ps = 10.0%; Pc = 22.5%; Ptn/Ps = 6.8; and Ptn/(Ps+Pc) = 2.1.

When a particle diameter of the silicon active material is sD50, and a particle diameter of the niobium-titanium oxide is tnD50, the following conditions are satisfied: sD50 = 80 nm; tnD50 = 428 nm; and tnD50/sD50 = 5.4.

The detailed data of the battery of the 2nd embodiment are shown in Table 1 to Table 3 below. The definitions of these parameters shown in Table 1 to Table 3 are the same as those stated in the comparative embodiment with corresponding values for the 2nd embodiment, so an explanation in this regard will not be provided here again.

| Table 1 - Active Composition of Comparative Embodiment, 1st Embodiment and 2nd Embodiment | | | | | |
|---|---|---|---|---|---|
| | | | Comparative Embodiment | 1st Embodiment | 2nd Embodiment |
| Weight Ratio (%) | Niobium-Titanium Oxide | Ptn | 0 | 22.5 | 67.5 |
| | Silicon Active Material | Ps | 10.0 | 10.0 | 10.0 |
| | Carbon Active Material | Pc | 90.0 | 67.5 | 22.5 |
| Ptn/Ps | | | 0 | 2.3 | 6.8 |
| Ptn/(Ps+Pc) | | | 0 | 0.3 | 2.1 |
| Particle Diameter of Niobium-Titanium Oxide (nm) | tnD50 | | - | 271 | 428 |
| Particle Diameter of Silicon Active Material (nm) | sD50 | | 80 | 80 | 80 |
| tnD50/sD50 | | | - | 3.4 | 5.4 |

| Table 2 - Charging and Discharging Performances of Batteries of Comparative Embodiment, 1st Embodiment and 2nd Embodiment | | | | | | | |
|---|---|---|---|---|---|---|---|
| | | | | | Comparative Embodiment | 1st Embodiment | 2nd Embodiment |
| 1st | Volumetric Capacity (mAh/cm$^3$) | 0.1C | Discharging | C0.1V1 | 265.0 | 270.9 | 273.6 |
| | | | Charging | C0.1V1 | 269.7 | 270.9 | 273.6 |
| | | 1C | Discharging | C1V1 | 269.7 | 270.9 | 273.6 |
| | | | Charging | C1V1 | 269.7 | 270.9 | 273.6 |
| | | 2C | Discharging | C2V1 | 163.3 | 171.9 | 273.6 |
| | | | Charging | C2V1 | 192.5 | 202.9 | 273.6 |
| | | 4C | Discharging | C4V1 | 158.2 | - | - |
| | | | Charging | C4V1 | 178.1 | - | - |
| | Gravimetric Capacity (mAh/g) | 0.1C | Discharging | C0.1G1 | 544.0 | 556.0 | 561.6 |
| | | | Charging | C0.1G1 | 553.6 | 556.0 | 561.6 |
| | | 1C | Discharging | C1G1 | 553.6 | 556.0 | 561.6 |
| | | | Charging | C1G1 | 553.6 | 556.0 | 561.6 |
| | | 2C | Discharging | C2G1 | 335.2 | 352.8 | 561.6 |
| | | | Charging | C2G1 | 395.2 | 416.4 | 561.6 |
| | | 4C | Discharging | C4G1 | 324.8 | - | - |
| | | | Charging | C4G1 | 365.6 | - | - |

(continued)

| Table 2 - Charging and Discharging Performances of Batteries of Comparative Embodiment, 1st Embodiment and 2nd Embodiment | | | | | Comparative Embodiment | 1st Embodiment | 2nd Embodiment |
|---|---|---|---|---|---|---|---|
| 2nd | Volumetric Capacity (mAh/cm$^3$) | 0.1C | Discharging | C0.1V2 | - | - | - |
| | | | Charging | | - | - | - |
| | | 1C | Discharging | C1V2 | - | - | - |
| | | | Charging | | - | - | - |
| | | 2C | Discharging | C2V2 | 119.6 | 151.4 | 269.3 |
| | | | Charging | | 154.5 | 176.5 | 273.7 |
| | | 4C | Discharging | C4V2 | - | - | - |
| | | | Charging | | - | - | - |
| | Gravimetric Capacity (mAh/g) | 0.1C | Discharging | C0.1G2 | - | - | - |
| | | | Charging | | - | - | - |
| | | 1C | Discharging | C1G2 | - | - | - |
| | | | Charging | | - | - | - |
| | | 2C | Discharging | C2G2 | 245.4 | 310.8 | 552.8 |
| | | | Charging | | 317.1 | 362.3 | 561.7 |
| | | 4C | Discharging | C4G2 | - | - | - |
| | | | Charging | | - | - | - |
| 3rd | Volumetric Capacity (mAh/cm$^3$) | 0.1C | Discharging | C0.1V3 | - | - | - |
| | | | Charging | | - | - | - |
| | | 1C | Discharging | C1V3 | - | - | - |
| | | | Charging | | - | - | - |
| | | 2C | Discharging | C2V3 | 91.6 | 135.2 | 251.6 |
| | | | Charging | | 115.6 | 154.9 | 273.7 |
| | | 4C | Discharging | C4V3 | - | - | - |
| | | | Charging | | - | - | - |
| | Gravimetric Capacity (mAh/g) | 0.1C | Discharging | C0.1G3 | - | - | - |
| | | | Charging | | - | - | - |
| | | 1C | Discharging | C1G3 | - | - | - |
| | | | Charging | | - | - | - |
| | | 2C | Discharging | C2G3 | 188.1 | 277.5 | 516.5 |
| | | | Charging | | 237.3 | 317.9 | 561.7 |
| | | 4C | Discharging | C4G3 | - | - | - |
| | | | Charging | | - | - | - |

(continued)

| Table 2 - Charging and Discharging Performances of Batteries of Comparative Embodiment, 1st Embodiment and 2nd Embodiment | | | | | Comparative Embodiment | 1st Embodiment | 2nd Embodiment |
|---|---|---|---|---|---|---|---|
| 4th | Volumetric Capacity (mAh/cm³) | 0.1C | Discharging | C0.1V4 | - | - | - |
| | | | Charging | | - | - | - |
| | | 1C | Discharging | C1V4 | - | - | - |
| | | | Charging | | - | - | - |
| | | 2C | Discharging | C2V4 | 74.0 | 123.5 | 243.6 |
| | | | Charging | | 90.7 | 139.7 | 273.7 |
| | | 4C | Discharging | C4V4 | - | - | - |
| | | | Charging | | - | - | - |
| | Gravimetric Capacity (mAh/g) | 0.1C | Discharging | C0.1G4 | - | - | - |
| | | | Charging | | - | - | - |
| | | 1C | Discharging | C1G4 | - | - | - |
| | | | Charging | | - | - | - |
| | | 2C | Discharging | C2G4 | 151.8 | 253.5 | 500.0 |
| | | | Charging | | 186.3 | 286.7 | 561.7 |
| | | 4C | Discharging | C4G4 | - | - | - |
| | | | Charging | | - | - | - |
| 5th | Volumetric Capacity (mAh/cm³) | 0.1C | Discharging | C0.1V5 | - | - | - |
| | | | Charging | | - | - | - |
| | | 1C | Discharging | C1V5 | - | - | - |
| | | | Charging | | - | - | - |
| | | 2C | Discharging | C2V5 | 63.0 | 114.6 | 236.9 |
| | | | Charging | | 74.8 | 128.9 | 273.7 |
| | | 4C | Discharging | C4V5 | - | - | - |
| | | | Charging | | - | - | - |
| | Gravimetric Capacity (mAh/g) | 0.1C | Discharging | C0.1G5 | - | - | - |
| | | | Charging | | - | - | - |
| | | 1C | Discharging | C1G5 | - | - | - |
| | | | Charging | | - | - | - |
| | | 2C | Discharging | C2G5 | 129.3 | 235.2 | 486.3 |
| | | | Charging | | 153.5 | 264.6 | 561.7 |
| | | 4C | Discharging | C4G5 | - | - | - |
| | | | Charging | | - | - | - |

(continued)

| Table 2 - Charging and Discharging Performances of Batteries of Comparative Embodiment, 1st Embodiment and 2nd Embodiment | | | | | | Comparative Embodiment | 1st Embodiment | 2nd Embodiment |
|---|---|---|---|---|---|---|---|---|
| 6th | Volumetric Capacity (mAh/cm³) | 0.1C | Discharging | C0.1V6 | | - | - | - |
| | | | Charging | | | - | - | - |
| | | 1C | Discharging | C1V6 | | - | - | - |
| | | | Charging | | | - | - | - |
| | | 2C | Discharging | C2V6 | | 65.6 | 107.2 | 231.5 |
| | | | Charging | | | 73.5 | 120.3 | 273.7 |
| | | 4C | Discharging | C4V6 | | - | - | - |
| | | | Charging | | | - | - | - |
| | Gravimetric Capacity (mAh/g) | 0.1C | Discharging | C0.1G6 | | - | - | - |
| | | | Charging | | | - | - | - |
| | | 1C | Discharging | C1G6 | | - | - | - |
| | | | Charging | | | - | - | - |
| | | 2C | Discharging | C2G6 | | 134.7 | 220.1 | 475.1 |
| | | | Charging | | | 150.8 | 247.0 | 561.7 |
| | | 4C | Discharging | C4G6 | | - | - | - |
| | | | Charging | | | - | - | - |
| 7th | Volumetric Capacity (mAh/cm³) | 0.1C | Discharging | C0.1V7 | | - | - | - |
| | | | Charging | | | - | - | - |
| | | 1C | Discharging | C1V7 | | - | - | - |
| | | | Charging | | | - | - | - |
| | | 2C | Discharging | C2V7 | | 67.4 | 100.5 | 231.5 |
| | | | Charging | | | 74.7 | 113.0 | 273.7 |
| | | 4C | Discharging | C4V7 | | - | - | - |
| | | | Charging | | | - | - | - |
| | Gravimetric Capacity (mAh/g) | 0.1C | Discharging | C0.1G7 | | - | - | - |
| | | | Charging | | | - | - | - |
| | | 1C | Discharging | C1G7 | | - | - | - |
| | | | Charging | | | - | - | - |
| | | 2C | Discharging | C2G7 | | 138.4 | 206.2 | 475.2 |
| | | | Charging | | | 153.3 | 232.0 | 561.7 |
| | | 4C | Discharging | C4G7 | | - | - | - |
| | | | Charging | | | - | - | - |

(continued)

| Table 2 - Charging and Discharging Performances of Batteries of Comparative Embodiment, 1st Embodiment and 2nd Embodiment | | | | | | Comparative Embodiment | 1st Embodiment | 2nd Embodiment |
|---|---|---|---|---|---|---|---|---|
| 8th | Volumetric Capacity (mAh/cm³) | 0.1C | Discharging | C0.1V8 | | - | - | - |
| | | | Charging | | | - | - | - |
| | | 1C | Discharging | C1V8 | | - | - | - |
| | | | Charging | | | - | - | - |
| | | 2C | Discharging | C2V8 | | 68.0 | 93.6 | 235.0 |
| | | | Charging | | | 75.7 | 105.9 | 273.7 |
| | | 4C | Discharging | C4V8 | | - | - | - |
| | | | Charging | | | - | - | - |
| | Gravimetric Capacity (mAh/g) | 0.1C | Discharging | C0.1G8 | | - | - | - |
| | | | Charging | | | - | - | - |
| | | 1C | Discharging | C1G8 | | - | - | - |
| | | | Charging | | | - | - | - |
| | | 2C | Discharging | C2G8 | | 139.6 | 192.1 | 482.4 |
| | | | Charging | | | 155.4 | 217.5 | 561.7 |
| | | 4C | Discharging | C4G8 | | - | - | - |
| | | | Charging | | | - | - | - |
| 9th | Volumetric Capacity (mAh/cm³) | 0.1C | Discharging | C0.1V9 | | - | - | - |
| | | | Charging | | | - | - | - |
| | | 1C | Discharging | C1V9 | | - | - | - |
| | | | Charging | | | - | - | - |
| | | 2C | Discharging | C2V9 | | 65.3 | 87.0 | 233.0 |
| | | | Charging | | | 74.0 | 99.0 | 271.3 |
| | | 4C | Discharging | C4V9 | | - | - | - |
| | | | Charging | | | - | - | - |
| | Gravimetric Capacity (mAh/g) | 0.1C | Discharging | C0.1G9 | | - | - | - |
| | | | Charging | | | - | - | - |
| | | 1C | Discharging | C1G9 | | - | - | - |
| | | | Charging | | | - | - | - |
| | | 2C | Discharging | C2G9 | | 134.1 | 178.6 | 478.3 |
| | | | Charging | | | 152.0 | 203.1 | 556.8 |
| | | 4C | Discharging | C4G9 | | - | - | - |
| | | | Charging | | | - | - | - |

| Table 2 - Charging and Discharging Performances of Batteries of Comparative Embodiment, 1st Embodiment and 2nd Embodiment | | | | | Comparative Embodiment | 1st Embodiment | 2nd Embodiment |
|---|---|---|---|---|---|---|---|
| 10th | Volumetric Capacity (mAh/cm³) | 0.1C | Discharging | C0.1V10 | - | - | - |
| | | | Charging | | - | - | - |
| | | 1C | Discharging | C1V10 | - | - | - |
| | | | Charging | | - | - | - |
| | | 2C | Discharging | C2V10 | 61.8 | 80.6 | 216.7 |
| | | | Charging | | 70.8 | 92.2 | 252.9 |
| | | 4C | Discharging | C4V10 | - | - | - |
| | | | Charging | | - | - | - |
| | Gravimetric Capacity (mAh/g) | 0.1C | Discharging | C0.1G10 | - | - | - |
| | | | Charging | | - | - | - |
| | | 1C | Discharging | C1G10 | - | - | - |
| | | | Charging | | - | - | - |
| | | 2C | Discharging | C2G10 | 126.8 | 165.4 | 444.8 |
| | | | Charging | | 145.3 | 189.3 | 519.2 |
| | | 4C | Discharging | C4G10 | - | - | - |
| | | | Charging | | - | - | - |
| 11th | Volumetric Capacity (mAh/cm³) | 0.1C | Discharging | C0.1V11 | - | - | - |
| | | | Charging | | - | - | - |
| | | 1C | Discharging | C1V11 | - | - | - |
| | | | Charging | | - | - | - |
| | | 2C | Discharging | C2V11 | 57.5 | 74.6 | 199.8 |
| | | | Charging | | 66.6 | 85.9 | 233.0 |
| | | 4C | Discharging | C4V11 | - | - | - |
| | | | Charging | | - | - | - |
| | Gravimetric Capacity (mAh/g) | 0.1C | Discharging | C0.1G11 | - | - | - |
| | | | Charging | | - | - | - |
| | | 1C | Discharging | C1G11 | - | - | - |
| | | | Charging | | - | - | - |
| | | 2C | Discharging | C2G11 | 118.0 | 153.2 | 410.0 |
| | | | Charging | | 136.8 | 176.2 | 478.2 |
| | | 4C | Discharging | C4G11 | - | - | - |
| | | | Charging | | - | - | - |

(continued)

| Table 2 - Charging and Discharging Performances of Batteries of Comparative Embodiment, 1st Embodiment and 2nd Embodiment | | | | | Comparative Embodiment | 1st Embodiment | 2nd Embodiment |
|---|---|---|---|---|---|---|---|
| 12th | Volumetric Capacity (mAh/cm$^3$) | 0.1C | Discharging | C0.1V12 | - | - | - |
| | | | Charging | | - | - | - |
| | | 1C | Discharging | C1V12 | - | - | - |
| | | | Charging | | - | - | - |
| | | 2C | Discharging | C2V12 | 53.3 | 68.8 | 182.5 |
| | | | Charging | | 62.0 | 79.4 | 213.7 |
| | | 4C | Discharging | C4V12 | - | - | - |
| | | | Charging | | - | - | - |
| | Gravimetric Capacity (mAh/g) | 0.1C | Discharging | C0.1G12 | - | - | - |
| | | | Charging | | - | - | - |
| | | 1C | Discharging | C1G12 | - | - | - |
| | | | Charging | | - | - | - |
| | | 2C | Discharging | C2G12 | 109.4 | 141.2 | 374.5 |
| | | | Charging | | 127.3 | 163.0 | 438.5 |
| | | 4C | Discharging | C4G12 | - | - | - |
| | | | Charging | | - | - | - |
| 13th | Volumetric Capacity (mAh/cm$^3$) | 0.1C | Discharging | C0.1V13 | - | - | - |
| | | | Charging | | - | - | - |
| | | 1C | Discharging | C1V13 | - | - | - |
| | | | Charging | | - | - | - |
| | | 2C | Discharging | C2V13 | 48.6 | 10.8 | 166.2 |
| | | | Charging | | 56.9 | 10.1 | 194.2 |
| | | 4C | Discharging | C4V13 | - | - | - |
| | | | Charging | | - | - | - |
| | Gravimetric Capacity (mAh/g) | 0.1C | Discharging | C0.1G13 | - | - | - |
| | | | Charging | | - | - | - |
| | | 1C | Discharging | C1G13 | - | - | - |
| | | | Charging | | - | - | - |
| | | 2C | Discharging | C2G13 | 99.8 | 22.2 | 341.2 |
| | | | Charging | | 116.8 | 20.8 | 398.5 |
| | | 4C | Discharging | C4G13 | - | - | - |
| | | | Charging | | - | - | - |

(continued)

| Table 2 - Charging and Discharging Performances of Batteries of Comparative Embodiment, 1st Embodiment and 2nd Embodiment | | | | | Comparative Embodiment | 1st Embodiment | 2nd Embodiment |
|---|---|---|---|---|---|---|---|
| 14th | Volumetric Capacity (mAh/cm³) | 0.1C | Discharging | C0.1V14 | - | - | - |
| | | | Charging | | - | - | - |
| | | 1C | Discharging | C1V14 | - | - | - |
| | | | Charging | | - | - | - |
| | | 2C | Discharging | C2V14 | 43.8 | 8.8 | 141.3 |
| | | | Charging | | 51.3 | 8.4 | 166.7 |
| | | 4C | Discharging | C4V14 | - | - | - |
| | | | Charging | | - | - | - |
| | Gravimetric Capacity (mAh/g) | 0.1C | Discharging | C0.1G14 | - | - | - |
| | | | Charging | | - | - | - |
| | | 1C | Discharging | C1G14 | - | - | - |
| | | | Charging | | - | - | - |
| | | 2C | Discharging | C2G14 | 89.8 | 18.1 | 290.0 |
| | | | Charging | | 105.2 | 17.3 | 342.1 |
| | | 4C | Discharging | C4G14 | - | - | - |
| | | | Charging | | - | - | - |
| 15th | Volumetric Capacity (mAh/cm³) | 0.1C | Discharging | C0.1V15 | - | - | - |
| | | | Charging | | - | - | - |
| | | 1C | Discharging | C1V15 | - | - | - |
| | | | Charging | | - | - | - |
| | | 2C | Discharging | C2V15 | 37.8 | 7.8 | 132.0 |
| | | | Charging | | 44.4 | 7.7 | 155.0 |
| | | 4C | Discharging | C4V15 | - | - | - |
| | | | Charging | | - | - | - |
| | Gravimetric Capacity (mAh/g) | 0.1C | Discharging | C0.1G15 | - | - | - |
| | | | Charging | | - | - | - |
| | | 1C | Discharging | C1G15 | - | - | - |
| | | | Charging | | - | - | - |
| | | 2C | Discharging | C2G15 | 77.5 | 16.0 | 271.0 |
| | | | Charging | | 91.1 | 15.8 | 318.1 |
| | | 4C | Discharging | C4G15 | - | - | - |
| | | | Charging | | - | - | - |

(continued)

| Table 2 - Charging and Discharging Performances of Batteries of Comparative Embodiment, 1st Embodiment and 2nd Embodiment | | | | | Comparative Embodiment | 1st Embodiment | 2nd Embodiment |
|---|---|---|---|---|---|---|---|
| 20th | Volumetric Capacity (mAh/cm³) | 0.1C | Discharging | C0.1V20 | - | - | - |
| | | | Charging | | - | - | - |
| | | 1C | Discharging | C1V20 | - | - | - |
| | | | Charging | | - | - | - |
| | | 2C | Discharging | C2V20 | 6.8 | - | 82.4 |
| | | | Charging | | 7.0 | - | 95.6 |
| | | 4C | Discharging | C4V20 | - | - | - |
| | | | Charging | | - | - | - |
| | Gravimetric Capacity (mAh/g) | 0.1C | Discharging | C0.1G20 | - | - | - |
| | | | Charging | | - | - | - |
| | | 1C | Discharging | C1G20 | - | - | - |
| | | | Charging | | - | - | - |
| | | 2C | Discharging | C2G20 | 14.0 | - | 169.1 |
| | | | Charging | | 14.3 | - | 196.1 |
| | | 4C | Discharging | C4G20 | - | - | - |
| | | | Charging | | - | - | - |
| 60th | Volumetric Capacity (mAh/cm³) | 0.1C | Discharging | C0.1V60 | - | - | - |
| | | | Charging | | - | - | - |
| | | 1C | Discharging | C1V60 | - | - | - |
| | | | Charging | | - | - | - |
| | | 2C | Discharging | C2V60 | 0.5 | - | - |
| | | | Charging | | 0.5 | - | - |
| | | 4C | Discharging | C4V60 | - | - | - |
| | | | Charging | | - | - | - |
| | Gravimetric Capacity (mAh/g) | 0.1C | Discharging | C0.1G60 | - | - | - |
| | | | Charging | | - | - | - |
| | | 1C | Discharging | C1G60 | - | - | - |
| | | | Charging | | - | - | - |
| | | 2C | Discharging | C2G60 | 1.1 | - | - |
| | | | Charging | | 0.9 | - | - |
| | | 4C | Discharging | C4G60 | - | - | - |
| | | | Charging | | - | - | - |
| Maximum among Discharge Volumetric Capacities of First Cycle to Fifteen Cycle (Current of 2C) | | | | C2VMax | 163.3 | 171.9 | 273.6 |

(continued)

| Table 2 - Charging and Discharging Performances of Batteries of Comparative Embodiment, 1st Embodiment and 2nd Embodiment | | | | |
|---|---|---|---|---|
| | | Comparative Embodiment | 1st Embodiment | 2nd Embodiment |
| Maximum among Discharge Gravimetric Capacities of First Cycle to Fifteen Cycle (Current of 2C) | C2GMax | 335.2 | 352.8 | 561.6 |
| Discharge Volumetric Capacity of First Cycle (Current of 2C)/ Discharge Volumetric Capacity of First Cycle (Current of 1C) | C2V1/ C1V1 | 0.61 | 0.63 | 1.00 |
| Discharge Volumetric Capacity of First Cycle (Current of 4C)/ Discharge Volumetric Capacity of First Cycle (Current of 2C) | C4V1/ C2V1 | 0.97 | - | - |
| Discharge Volumetric Capacity of Tenth Cycle (Current of 2C)/ Discharge Volumetric Capacity of Fifth Cycle (Current of 2C) | C2V10/C2V5 | 0.98 | 0.70 | 0.91 |
| Discharge Volumetric Capacity of Twentieth Cycle (Current of 2C)/ Discharge Volumetric Capacity of Fifth Cycle (Current of 2C) | C2V20/ C2V5 | 0.11 | - | 0.35 |
| Discharge Volumetric Capacity of Sixtieth Cycle (Current of 2C)/ Discharge Volumetric Capacity of Fifth Cycle (Current of 2C) | C2V60/ C2V5 | 0.01 | - | - |

| Table 3 - Coulombic Efficiencies of Comparative Embodiment, 1st Embodiment and 2nd Embodiment | | | | | |
|---|---|---|---|---|---|
| | | | Comparative Embodiment | 1st Embodiment | 2nd Embodiment |
| Coulombic Efficiency (%) | 2C | 1st Time | 84.8 | 84.7 | 100.0 |
| | | 2nd Time | 77.4 | 85.8 | 98.4 |
| | | 3rd Time | 79.3 | 87.3 | 91.9 |
| | | 4th Time | 81.5 | 88.4 | 89.0 |
| | | 5th Time | 84.3 | 88.9 | 86.6 |
| | | 6th Time | 89.3 | 89.1 | 84.6 |
| | | 7th Time | 90.3 | 88.9 | 84.6 |
| | | 8th Time | 89.9 | 88.3 | 85.9 |
| | | 9th Time | 88.2 | 87.9 | 85.9 |
| | | 10th Time | 87.3 | 87.4 | 85.7 |
| | | 11th Time | 86.3 | 86.9 | 85.7 |
| | | 12th Time | 86.0 | 86.6 | 85.4 |
| | | 13th Time | 85.5 | 106.9 | 85.6 |

(continued)

| Table 3 - Coulombic Efficiencies of Comparative Embodiment, 1st Embodiment and 2nd Embodiment | | | | | |
|---|---|---|---|---|---|
| | | | Comparative Embodiment | 1st Embodiment | 2nd Embodiment |
| | | 14th Time | 85.3 | 104.3 | 84.8 |
| | | 15th Time | 85.0 | 101.4 | 85.2 |
| | | 16th Time | 90.6 | - | - |
| | | 17th Time | 98.4 | - | - |
| | | 18th Time | 99.0 | - | - |
| | | 19th Time | 98.6 | - | - |
| | | 20th Time | 98.3 | - | - |
| | | 21st Time | 99.2 | - | - |
| | | 22nd Time | 99.5 | - | - |
| | | 23rd Time | 130.2 | - | - |
| | | 24th Time | 134.7 | - | - |
| | | 25th Time | 131.8 | - | - |
| | | 26th Time | 131.3 | - | - |
| | | 27th Time | 130.0 | - | - |
| | | 28th Time | 130.0 | - | - |
| | | 29th Time | 129.0 | - | - |
| | | 30th Time | 126.9 | - | - |
| | | 31st Time | 126.3 | - | - |
| | | 32nd Time | 128.0 | - | - |
| | | 33rd Time | 127.0 | - | - |
| | | 34th Time | 123.2 | - | - |
| | | 35th Time | 124.1 | - | - |
| | | 36th Time | 124.7 | - | - |
| | | 37th Time | 123.5 | - | - |
| | | 38th Time | 121.6 | - | - |
| | | 39th Time | 124.7 | - | - |
| | | 40th Time | 122.7 | - | - |
| | | 41st Time | 120.7 | - | - |
| | | 42nd Time | 121.1 | - | - |
| | | 43rd Time | 121.7 | - | - |
| | | 44th Time | 118.9 | - | - |
| | | 45th Time | 119.4 | - | - |
| | | 46th Time | 120.0 | - | - |
| | | 47th Time | 120.0 | - | - |
| | | 48th Time | 120.0 | - | - |
| | | 49th Time | 117.6 | - | - |
| | | 50th Time | 120.6 | - | - |

(continued)

| Table 3 - Coulombic Efficiencies of Comparative Embodiment, 1st Embodiment and 2nd Embodiment | | | | |
|---|---|---|---|---|
| | | Comparative Embodiment | 1st Embodiment | 2nd Embodiment |
| Total Number of Coulombic Efficiency Greater than 85% and Smaller than 110% in First Fifteen Cycles (Current of 2C) | n85C2E15 | 10 | 14 | 12 |
| Total Number of Coulombic Efficiency Greater than 90% and Smaller than 110% in First Fifteen Cycles (Current of 2C) | n90C2E15 | 1 | 3 | 3 |
| Total Number of Coulombic Efficiency Greater than 85% and Smaller than 110% in First Fifty Cycles (Current of 2C) | n85C2E50 | 17 | - | - |
| Total Number of Coulombic Efficiency Greater than 90% and Smaller than 110% in First Fifty Cycles (Current of 2C) | n90C2E50 | 8 | - | - |
| Average of Coulombic Efficiencies in First Fifteen Cycles (%) (Current of 2C) | aC2E15 | 85.4 | 90.9 | 88.0 |
| Average of Coulombic Efficiencies in First Fifty Cycles (%) (Current of 2C) | aC2E50 | 109.1 | - | - |

<3rd Embodiment>

The 3rd embodiment provides a battery, and an anode thereof includes an active composition. The active composition includes a niobium-titanium oxide and a silicon active material. When a weight ratio of the niobium-titanium oxide in the active composition is Ptn, and a weight ratio of the silicon active material in the active composition is Ps, the following conditions are satisfied: Ptn = 90.0%; Ps = 10.0%; and Ptn/Ps = 9.0.

When a particle diameter of the silicon active material is sD50, and a particle diameter of the niobium-titanium oxide is tnD50, the following conditions are satisfied: sD50 = 80 nm; tnD50 = 428 nm; and tnD50/sD50 = 5.4.

The detailed data of the battery of the 3rd embodiment are shown in Table 4 to Table 6 below. The definitions of these parameters shown in Table 4 to Table 6 are the same as those stated in the comparative embodiment with corresponding values for the 3rd embodiment, so an explanation in this regard will not be provided here again.

<4th Embodiment>

The 4th embodiment provides a battery, and an anode thereof includes an active composition. The active composition includes a niobium-titanium oxide and a silicon active material. When a weight ratio of the niobium-titanium oxide in the active composition is Ptn, and a weight ratio of the silicon active material in the active composition is Ps, the following conditions are satisfied: Ptn = 92.5%; Ps = 7.5%; and Ptn/Ps = 12.3.

When a particle diameter of the silicon active material is sD50, and a particle diameter of the niobium-titanium oxide is tnD50, the following conditions are satisfied: sD50 = 80 nm; tnD50 = 428 nm; and tnD50/sD50 = 5.4.

The detailed data of the battery of the 4th embodiment are shown in Table 4 to Table 6 below. The definitions of these parameters shown in Table 4 to Table 6 are the same as those stated in the comparative embodiment with corresponding values for the 4th embodiment, so an explanation in this regard will not be provided here again.

<5th Embodiment>

The 5th embodiment provides a battery, and an anode thereof includes an active composition. The active composition includes a niobium-titanium oxide and a silicon active material. When a weight ratio of the niobium-titanium oxide in the active composition is Ptn, and a weight ratio of the silicon active material in the active composition is Ps, the following conditions are satisfied: Ptn = 87.5%; Ps = 12.5%; and Ptn/Ps = 7.0.

When a particle diameter of the silicon active material is sD50, and a particle diameter of the niobium-titanium oxide is tnD50, the following conditions are satisfied: sD50 = 80 nm; tnD50 = 610 nm; and tnD50/sD50 = 7.6.

The detailed data of the battery of the 5th embodiment are shown in Table 4 to Table 6 below. The definitions of these parameters shown in Table 4 to Table 6 are the same as those stated in the comparative embodiment with corresponding values for the 5th embodiment, so an explanation in this regard will not be provided here again.

| Table 4 - Active Composition of 3rd Embodiment, 4th Embodiment and 5th Embodiment | | | | | |
|---|---|---|---|---|---|
| | | | 3rd Embodiment | 4th Embodiment | 5th Embodiment |
| Weight Ratio (%) | Niobium-Titanium Oxide | Ptn | 90.0 | 92.5 | 87.5 |
| | Silicon Active Material | Ps | 10.0 | 7.5 | 12.5 |
| | Carbon Active Material | Pc | 0 | 0 | 0 |
| Ptn/Ps | | | 9.0 | 12.3 | 7.0 |
| Ptn/(Ps+Pc) | | | 9.0 | 12.3 | 7.0 |
| Particle Diameter of Niobium-Titanium Oxide (nm) | | tnD50 | 428 | 428 | 610 |
| Particle Diameter of Silicon Active Material (nm) | | sD50 | 80 | 80 | 80 |
| tnD50/sD50 | | | 5.4 | 5.4 | 7.6 |

| Table 5 - Charging and Discharging Performances of Batteries of 3rd Embodiment, 4th Embodiment and 5th Embodiment | | | | | | | | |
|---|---|---|---|---|---|---|---|---|
| | | | | | | 3rd Embodiment | 4th Embodiment | 5th Embodiment |
| 1st | Volumetric Capacity (mAh/cm$^3$) | 0.1C | Discharging | C0.1V1 | | 275.2 | - | - |
| | | | Charging | | | 275.2 | - | - |
| | | 1C | Discharging | C1V1 | | 240.5 | - | - |
| | | | Charging | | | 275.2 | - | - |
| | | 2C | Discharging | C2V1 | | 275.1 | - | - |
| | | | Charging | | | 275.1 | - | - |
| | | 4C | Discharging | C4V1 | | 271.7 | - | - |
| | | | Charging | | | 274.8 | - | - |
| | Gravimetric Capacity (mAh/g) | 0.1C | Discharging | C0.1G1 | | 564.8 | - | - |
| | | | Charging | | | 564.8 | - | - |
| | | 1C | Discharging | C1G1 | | 493.6 | - | - |
| | | | Charging | | | 564.8 | - | - |
| | | 2C | Discharging | C2G1 | | 564.7 | - | - |
| | | | Charging | | | 564.7 | - | - |
| | | 4C | Discharging | C4G1 | | 557.6 | - | - |
| | | | Charging | | | 564.0 | - | - |

(continued)

| Table 5 - Charging and Discharging Performances of Batteries of 3rd Embodiment, 4th Embodiment and 5th Embodiment | | | | | 3rd Embodiment | 4th Embodiment | 5th Embodiment |
|---|---|---|---|---|---|---|---|
| 2nd | Volumetric Capacity (mAh/cm³) | 0.1C | Discharging | C0.1V2 | - | - | - |
| | | | Charging | | - | - | - |
| | | 1C | Discharging | C1V2 | - | - | - |
| | | | Charging | | - | - | - |
| | | 2C | Discharging | C2V2 | 275.1 | - | - |
| | | | Charging | | 275.1 | - | - |
| | | 4C | Discharging | C4V2 | - | - | - |
| | | | Charging | | - | - | - |
| | Gravimetric Capacity (mAh/g) | 0.1C | Discharging | C0.1G2 | - | - | - |
| | | | Charging | | - | - | - |
| | | 1C | Discharging | C1G2 | - | - | - |
| | | | Charging | | - | - | - |
| | | 2C | Discharging | C2G2 | 564.7 | - | - |
| | | | Charging | | 564.7 | - | - |
| | | 4C | Discharging | C4G2 | - | - | - |
| | | | Charging | | - | - | - |
| 3rd | Volumetric Capacity (mAh/cm³) | 0.1C | Discharging | C0.1V3 | - | - | - |
| | | | Charging | | - | - | - |
| | | 1C | Discharging | C1V3 | - | - | - |
| | | | Charging | | - | - | - |
| | | 2C | Discharging | C2V3 | 263.7 | - | - |
| | | | Charging | | 275.1 | - | - |
| | | 4C | Discharging | C4V3 | - | - | - |
| | | | Charging | | - | - | - |
| | Gravimetric Capacity (mAh/g) | 0.1C | Discharging | C0.1G3 | - | - | - |
| | | | Charging | | - | - | - |
| | | 1C | Discharging | C1G3 | - | - | - |
| | | | Charging | | - | - | - |
| | | 2C | Discharging | C2G3 | 541.2 | - | - |
| | | | Charging | | 564.7 | - | - |
| | | 4C | Discharging | C4G3 | - | - | - |
| | | | Charging | | - | - | - |

(continued)

| Table 5 - Charging and Discharging Performances of Batteries of 3rd Embodiment, 4th Embodiment and 5th Embodiment | | | | | 3rd Embodiment | 4th Embodiment | 5th Embodiment |
|---|---|---|---|---|---|---|---|
| 4th | Volumetric Capacity (mAh/cm³) | 0.1C | Discharging | C0.1V4 | - | - | - |
| | | | Charging | | - | - | - |
| | | 1C | Discharging | C1V4 | - | - | - |
| | | | Charging | | - | - | - |
| | | 2C | Discharging | C2V4 | 253.0 | - | - |
| | | | Charging | | 275.1 | - | - |
| | | 4C | Discharging | C4V4 | - | - | - |
| | | | Charging | | - | - | - |
| | Gravimetric Capacity (mAh/g) | 0.1C | Discharging | C0.1G4 | - | - | - |
| | | | Charging | | - | - | - |
| | | 1C | Discharging | C1G4 | - | - | - |
| | | | Charging | | - | - | - |
| | | 2C | Discharging | C2G4 | 519.3 | - | - |
| | | | Charging | | 564.7 | - | - |
| | | 4C | Discharging | C4G4 | - | - | - |
| | | | Charging | | - | - | - |
| 5th | Volumetric Capacity (mAh/cm³) | 0.1C | Discharging | C0.1V5 | - | - | - |
| | | | Charging | | - | - | - |
| | | 1C | Discharging | C1V5 | - | - | - |
| | | | Charging | | - | - | - |
| | | 2C | Discharging | C2V5 | 250.5 | - | - |
| | | | Charging | | 275.1 | - | - |
| | | 4C | Discharging | C4V5 | - | - | - |
| | | | Charging | | - | - | - |
| | Gravimetric Capacity (mAh/g) | 0.1C | Discharging | C0.1G5 | - | - | - |
| | | | Charging | | - | - | - |
| | | 1C | Discharging | C1G5 | - | - | - |
| | | | Charging | | - | - | - |
| | | 2C | Discharging | C2G5 | 514.1 | - | - |
| | | | Charging | | 564.7 | - | - |
| | | 4C | Discharging | C4G5 | - | - | - |
| | | | Charging | | - | - | - |

| Table 5 - Charging and Discharging Performances of Batteries of 3rd Embodiment, 4th Embodiment and 5th Embodiment | | | | | | 3rd Embodiment | 4th Embodiment | 5th Embodiment |
|---|---|---|---|---|---|---|---|---|
| 6th | Volumetric Capacity (mAh/cm³) | 0.1C | Discharging | C0.1V6 | | - | - | - |
| | | | Charging | | | - | - | - |
| | | 1C | Discharging | C1V6 | | - | - | - |
| | | | Charging | | | - | - | - |
| | | 2C | Discharging | C2V6 | | 248.0 | - | - |
| | | | Charging | | | 275.1 | - | - |
| | | 4C | Discharging | C4V6 | | - | - | - |
| | | | Charging | | | - | - | - |
| | Gravimetric Capacity (mAh/g) | 0.1C | Discharging | C0.1G6 | | - | - | - |
| | | | Charging | | | - | - | - |
| | | 1C | Discharging | C1G6 | | - | - | - |
| | | | Charging | | | - | - | - |
| | | 2C | Discharging | C2G6 | | 509.0 | - | - |
| | | | Charging | | | 564.7 | - | - |
| | | 4C | Discharging | C4G6 | | - | - | - |
| | | | Charging | | | - | - | - |
| 7th | Volumetric Capacity (mAh/cm³) | 0.1C | Discharging | C0.1V7 | | - | - | - |
| | | | Charging | | | - | - | - |
| | | 1C | Discharging | C1V7 | | - | - | - |
| | | | Charging | | | - | - | - |
| | | 2C | Discharging | C2V7 | | 248.0 | - | - |
| | | | Charging | | | 275.1 | - | - |
| | | 4C | Discharging | C4V7 | | - | - | - |
| | | | Charging | | | - | - | - |
| | Gravimetric Capacity (mAh/g) | 0.1C | Discharging | C0.1G7 | | - | - | - |
| | | | Charging | | | - | - | - |
| | | 1C | Discharging | C1G7 | | - | - | - |
| | | | Charging | | | - | - | - |
| | | 2C | Discharging | C2G7 | | 509.1 | - | - |
| | | | Charging | | | 564.7 | - | - |
| | | 4C | Discharging | C4G7 | | - | - | - |
| | | | Charging | | | - | - | - |

| Table 5 - Charging and Discharging Performances of Batteries of 3rd Embodiment, 4th Embodiment and 5th Embodiment | | | | | 3rd Embodiment | 4th Embodiment | 5th Embodiment |
|---|---|---|---|---|---|---|---|
| 8th | Volumetric Capacity (mAh/cm$^3$) | 0.1C | Discharging | C0.1V8 | - | - | - |
| | | | Charging | | - | - | - |
| | | 1C | Discharging | C1V8 | - | - | - |
| | | | Charging | | - | - | - |
| | | 2C | Discharging | C2V8 | 251.8 | - | - |
| | | | Charging | | 275.1 | - | - |
| | | 4C | Discharging | C4V8 | - | - | - |
| | | | Charging | | - | - | - |
| | Gravimetric Capacity (mAh/g) | 0.1C | Discharging | C0.1G8 | - | - | - |
| | | | Charging | | - | - | - |
| | | 1C | Discharging | C1G8 | - | - | - |
| | | | Charging | | - | - | - |
| | | 2C | Discharging | C2G8 | 516.8 | - | - |
| | | | Charging | | 564.7 | - | - |
| | | 4C | Discharging | C4G8 | - | - | - |
| | | | Charging | | - | - | - |
| 9th | Volumetric Capacity (mAh/cm$^3$) | 0.1C | Discharging | C0.1V9 | - | - | - |
| | | | Charging | | - | - | - |
| | | 1C | Discharging | C1V9 | - | - | - |
| | | | Charging | | - | - | - |
| | | 2C | Discharging | C2V9 | 253.8 | - | - |
| | | | Charging | | 275.1 | - | - |
| | | 4C | Discharging | C4V9 | - | - | - |
| | | | Charging | | - | - | - |
| | Gravimetric Capacity (mAh/g) | 0.1C | Discharging | C0.1G9 | - | - | - |
| | | | Charging | | - | - | - |
| | | 1C | Discharging | C1G9 | - | - | - |
| | | | Charging | | - | - | - |
| | | 2C | Discharging | C2G9 | 521.0 | - | - |
| | | | Charging | | 564.7 | - | - |
| | | 4C | Discharging | C4G9 | - | - | - |
| | | | Charging | | - | - | - |

(continued)

| Table 5 - Charging and Discharging Performances of Batteries of 3rd Embodiment, 4th Embodiment and 5th Embodiment | | | | | 3rd Embodiment | 4th Embodiment | 5th Embodiment |
|---|---|---|---|---|---|---|---|
| 10th | Volumetric Capacity (mAh/cm$^3$) | 0.1C | Discharging | C0.1V10 | - | - | - |
| | | | Charging | | - | - | - |
| | | 1C | Discharging | C1V10 | - | - | - |
| | | | Charging | | - | - | - |
| | | 2C | Discharging | C2V10 | 258.9 | - | - |
| | | | Charging | | 275.1 | - | - |
| | | 4C | Discharging | C4V10 | - | - | - |
| | | | Charging | | - | - | - |
| | Gravimetric Capacity (mAh/g) | 0.1C | Discharging | C0.1G10 | - | - | - |
| | | | Charging | | - | - | - |
| | | 1C | Discharging | C1G10 | - | - | - |
| | | | Charging | | - | - | - |
| | | 2C | Discharging | C2G10 | 531.5 | - | - |
| | | | Charging | | 564.7 | - | - |
| | | 4C | Discharging | C4G10 | - | - | - |
| | | | Charging | | - | - | - |
| 11th | Volumetric Capacity (mAh/cm$^3$) | 0.1C | Discharging | C0.1V11 | - | - | - |
| | | | Charging | | - | - | - |
| | | 1C | Discharging | C1V11 | - | - | - |
| | | | Charging | | - | - | - |
| | | 2C | Discharging | C2V11 | 259.0 | - | - |
| | | | Charging | | 275.1 | - | - |
| | | 4C | Discharging | C4V11 | - | - | - |
| | | | Charging | | - | - | - |
| | Gravimetric Capacity (mAh/g) | 0.1C | Discharging | C0.1G11 | - | - | - |
| | | | Charging | | - | - | - |
| | | 1C | Discharging | C1G11 | - | - | - |
| | | | Charging | | - | - | - |
| | | 2C | Discharging | C2G 11 | 531.7 | - | - |
| | | | Charging | | 564.7 | - | - |
| | | 4C | Discharging | C4G 11 | - | - | - |
| | | | Charging | | - | - | - |

(continued)

| Table 5 - Charging and Discharging Performances of Batteries of 3rd Embodiment, 4th Embodiment and 5th Embodiment | | | | | 3rd Embodiment | 4th Embodiment | 5th Embodiment |
|---|---|---|---|---|---|---|---|
| 12th | Volumetric Capacity (mAh/cm³) | 0.1C | Discharging | C0.1V12 | - | - | - |
| | | | Charging | | - | - | - |
| | | 1C | Discharging | C1V12 | - | - | - |
| | | | Charging | | - | - | - |
| | | 2C | Discharging | C2V12 | 262.1 | - | - |
| | | | Charging | | 275.1 | - | - |
| | | 4C | Discharging | C4V12 | - | - | - |
| | | | Charging | | - | - | - |
| | Gravimetric Capacity (mAh/g) | 0.1C | Discharging | C0.1G12 | - | - | - |
| | | | Charging | | - | - | - |
| | | 1C | Discharging | C1G12 | - | - | - |
| | | | Charging | | - | - | - |
| | | 2C | Discharging | C2G12 | 537.9 | - | - |
| | | | Charging | | 564.7 | - | - |
| | | 4C | Discharging | C4G12 | - | - | - |
| | | | Charging | | - | - | - |
| 13th | Volumetric Capacity (mAh/cm³) | 0.1C | Discharging | C0.1V13 | - | - | - |
| | | | Charging | | - | - | - |
| | | 1C | Discharging | C1V13 | - | - | - |
| | | | Charging | | - | - | - |
| | | 2C | Discharging | C2V13 | 271.9 | - | - |
| | | | Charging | | 275.1 | - | - |
| | | 4C | Discharging | C4V13 | - | - | - |
| | | | Charging | | - | - | - |
| | Gravimetric Capacity (mAh/g) | 0.1C | Discharging | C0.1G13 | - | - | - |
| | | | Charging | | - | - | - |
| | | 1C | Discharging | C1G13 | - | - | - |
| | | | Charging | | - | - | - |
| | | 2C | Discharging | C2G13 | 558.2 | - | - |
| | | | Charging | | 564.7 | - | - |
| | | 4C | Discharging | C4G13 | - | - | - |
| | | | Charging | | - | - | - |

(continued)

| Table 5 - Charging and Discharging Performances of Batteries of 3rd Embodiment, 4th Embodiment and 5th Embodiment | | | | | | 3rd Embodiment | 4th Embodiment | 5th Embodiment |
|---|---|---|---|---|---|---|---|---|
| 14th | Volumetric Capacity (mAh/cm$^3$) | 0.1C | Discharging | C0.1V14 | | - | - | - |
| | | | Charging | | | - | - | - |
| | | 1C | Discharging | C1V14 | | - | - | - |
| | | | Charging | | | - | - | - |
| | | 2C | Discharging | C2V14 | | 268.4 | - | - |
| | | | Charging | | | 275.1 | - | - |
| | | 4C | Discharging | C4V14 | | - | - | - |
| | | | Charging | | | - | - | - |
| | Gravimetric Capacity (mAh/g) | 0.1C | Discharging | C0.1G14 | | - | - | - |
| | | | Charging | | | - | - | - |
| | | 1C | Discharging | C1G14 | | - | - | - |
| | | | Charging | | | - | - | - |
| | | 2C | Discharging | C2G14 | | 550.9 | - | - |
| | | | Charging | | | 564.7 | - | - |
| | | 4C | Discharging | C4G14 | | - | - | - |
| | | | Charging | | | - | - | - |
| 15th | Volumetric Capacity (mAh/cm$^3$) | 0.1C | Discharging | C0.1V15 | | - | - | - |
| | | | Charging | | | - | - | - |
| | | 1C | Discharging | C1V15 | | - | - | - |
| | | | Charging | | | - | - | - |
| | | 2C | Discharging | C2V15 | | 269.0 | - | - |
| | | | Charging | | | 275.1 | - | - |
| | | 4C | Discharging | C4V15 | | - | - | - |
| | | | Charging | | | - | - | - |
| | Gravimetric Capacity (mAh/g) | 0.1C | Discharging | C0.1G15 | | - | - | - |
| | | | Charging | | | - | - | - |
| | | 1C | Discharging | C1G15 | | - | - | - |
| | | | Charging | | | - | - | - |
| | | 2C | Discharging | C2G15 | | 552.0 | - | - |
| | | | Charging | | | 564.7 | - | - |
| | | 4C | Discharging | C4G15 | | - | - | - |
| | | | Charging | | | - | - | - |

(continued)

| Table 5 - Charging and Discharging Performances of Batteries of 3rd Embodiment, 4th Embodiment and 5th Embodiment | | | | | 3rd Embodiment | 4th Embodiment | 5th Embodiment |
|---|---|---|---|---|---|---|---|
| 20th | Volumetric Capacity (mAh/cm$^3$) | 0.1C | Discharging | C0.1V20 | - | - | - |
| | | | Charging | | - | - | - |
| | | 1C | Discharging | C1V20 | - | - | - |
| | | | Charging | | - | - | - |
| | | 2C | Discharging | C2V20 | 268.4 | - | - |
| | | | Charging | | 275.1 | - | - |
| | | 4C | Discharging | C4V20 | - | - | - |
| | | | Charging | | - | - | - |
| | Gravimetric Capacity (mAh/g) | 0.1C | Discharging | C0.1G20 | - | - | - |
| | | | Charging | | - | - | - |
| | | 1C | Discharging | C1G20 | - | - | - |
| | | | Charging | | - | - | - |
| | | 2C | Discharging | C2G20 | 550.9 | - | - |
| | | | Charging | | 564.7 | - | - |
| | | 4C | Discharging | C4G20 | - | - | - |
| | | | Charging | | - | - | - |
| 60th | Volumetric Capacity (mAh/cm$^3$) | 0.1C | Discharging | C0.1V60 | - | - | - |
| | | | Charging | | - | - | - |
| | | 1C | Discharging | C1V60 | - | - | - |
| | | | Charging | | - | - | - |
| | | 2C | Discharging | C2V60 | 247.5 | - | - |
| | | | Charging | | 275.1 | - | - |
| | | 4C | Discharging | C4V60 | - | - | - |
| | | | Charging | | - | - | - |
| | Gravimetric Capacity (mAh/g) | 0.1C | Discharging | C0.1G60 | - | - | - |
| | | | Charging | | - | - | - |
| | | 1C | Discharging | C1G60 | - | - | - |
| | | | Charging | | - | - | - |
| | | 2C | Discharging | C2G60 | 508.0 | - | - |
| | | | Charging | | 564.7 | - | - |
| | | 4C | Discharging | C4G60 | - | - | - |
| | | | Charging | | - | - | - |
| Maximum among Discharge Volumetric Capacities of First Cycle to Fifteen Cycle (Current of 2C) | | | | C2VMax | 275.1 | - | - |

(continued)

| Table 5 - Charging and Discharging Performances of Batteries of 3rd Embodiment, 4th Embodiment and 5th Embodiment | | | | |
|---|---|---|---|---|
| | | 3rd Embodiment | 4th Embodiment | 5th Embodiment |
| Maximum among Discharge Gravimetric Capacities of First Cycle to Fifteen Cycle (Current of 2C) | C2GMax | 564.7 | - | - |
| Discharge Volumetric Capacity of First Cycle (Current of 2C)/ Discharge Volumetric Capacity of First Cycle (Current of 1C) | C2V1/ C1V1 | 1.14 | - | - |
| Discharge Volumetric Capacity of First Cycle (Current of 4C)/ Discharge Volumetric Capacity of First Cycle (Current of 2C) | C4V1/ C2V1 | 0.99 | - | - |
| Discharge Volumetric Capacity of Tenth Cycle (Current of 2C)/ Discharge Volumetric Capacity of Fifth Cycle (Current of 2C) | C2V10/ C2V5 | 1.03 | - | - |
| Discharge Volumetric Capacity of Twentieth Cycle (Current of 2C)/ Discharge Volumetric Capacity of Fifth Cycle (Current of 2C) | C2V20/C2V5 | 1.07 | - | - |
| Discharge Volumetric Capacity of Sixtieth Cycle (Current of 2C)/ Discharge Volumetric Capacity of Fifth Cycle (Current of 2C) | C2V60/ C2V5 | 0.99 | - | - |

| Table 6 - Coulombic Efficiencies of 3rd Embodiment, 4th Embodiment and 5th Embodiment | | | | | |
|---|---|---|---|---|---|
| | | | 3rd Embodiment | 4th Embodiment | 5th Embodiment |
| Coulombic Efficiency (%) | 2C | 1st Time | 100.0 | - | - |
| | | 2nd Time | 100.0 | - | - |
| | | 3rd Time | 95.8 | - | - |
| | | 4th Time | 92.0 | - | - |
| | | 5th Time | 91.0 | - | - |
| | | 6th Time | 90.1 | - | - |
| | | 7th Time | 90.2 | - | - |
| | | 8th Time | 91.5 | - | - |
| | | 9th Time | 92.3 | - | - |
| | | 10th Time | 94.1 | - | - |
| | | 11th Time | 94.1 | - | - |
| | | 12th Time | 95.3 | - | - |
| | | 13th Time | 98.8 | - | - |
| | | 14th Time | 97.6 | - | - |
| | | 15th Time | 97.8 | - | - |
| | | 16th Time | 98.0 | - | - |

(continued)

| Table 6 - Coulombic Efficiencies of 3rd Embodiment, 4th Embodiment and 5th Embodiment | | | | | |
|---|---|---|---|---|---|
| | | | 3rd Embodiment | 4th Embodiment | 5th Embodiment |
| | | 17th Time | 97.6 | - | - |
| | | 18th Time | 97.6 | - | - |
| | | 19th Time | 97.8 | - | - |
| | | 20th Time | 97.5 | - | - |
| | | 21st Time | 97.6 | - | - |
| | | 22nd Time | 97.6 | - | - |
| | | 23rd Time | 97.2 | - | - |
| | | 24th Time | 97.6 | - | - |
| | | 25th Time | 97.2 | - | - |
| | | 26th Time | 97.0 | - | - |
| | | 27th Time | 96.7 | - | - |
| | | 28th Time | 96.4 | - | - |
| | | 29th Time | 96.0 | - | - |
| | | 30th Time | 96.9 | - | - |
| | | 31st Time | 95.4 | - | - |
| | | 32nd Time | 95.6 | - | - |
| | | 33rd Time | 96.5 | - | - |
| | | 34th Time | 95.0 | - | - |
| | | 35th Time | 95.4 | - | - |
| | | 36th Time | 94.4 | - | - |
| | | 37th Time | 93.9 | - | - |
| | | 38th Time | 94.3 | - | - |
| | | 39th Time | 93.6 | - | - |
| | | 40th Time | 93.8 | - | - |
| | | 41st Time | 92.9 | - | - |
| | | 42nd Time | 92.1 | - | - |
| | | 43rd Time | 92.1 | - | - |
| | | 44th Time | 91.6 | - | - |
| | | 45th Time | 91.1 | - | - |
| | | 46th Time | 89.4 | - | - |
| | | 47th Time | 90.0 | - | - |
| | | 48th Time | 87.9 | - | - |
| | | 49th Time | 90.7 | - | - |
| | | 50th Time | 87.1 | - | - |

(continued)

| Table 6 - Coulombic Efficiencies of 3rd Embodiment, 4th Embodiment and 5th Embodiment | | | | |
|---|---|---|---|---|
| | | 3rd Embodiment | 4th Embodiment | 5th Embodiment |
| Total Number of Coulombic Efficiency Greater than 85% and Smaller than 110% in First Fifteen Cycles (Current of 2C) | n85C2E15 | 15 | - | - |
| Total Number of Coulombic Efficiency Greater than 90% and Smaller than 110% in First Fifteen Cycles (Current of 2C) | n90C2E15 | 15 | - | - |
| Total Number of Coulombic Efficiency Greater than 85% and Smaller than 110% in First Fifty Cycles (Current of 2C) | n85C2E50 | 50 | - | - |
| Total Number of Coulombic Efficiency Greater than 90% and Smaller than 110% in First Fifty Cycles (Current of 2C) | n90C2E50 | 46 | - | - |
| Average of Coulombic Efficiencies in First Fifteen Cycles (%) (Current of 2C) | aC2E15 | 94.7 | - | - |
| Average of Coulombic Efficiencies in First Fifty Cycles (%) (Current of 2C) | aC2E50 | 94.6 | - | - |

**Claims**

1. A composition, **characterized in** comprising:

   an active composition, comprising a niobium-titanium oxide and a silicon active material;
   wherein the niobium-titanium oxide comprises a niobium element, a titanium element and an oxygen element;
   wherein a weight ratio of the niobium-titanium oxide in the active composition is Ptn, a weight ratio of the silicon active material in the active composition is Ps, and the following condition is satisfied:

$$0.12 \leq Ptn/Ps \leq 99.0.$$

2. The composition of claim 1, wherein the niobium-titanium oxide is a doped niobium-titanium oxide.

3. The composition of claim 1 or claim 2, wherein the doped niobium-titanium oxide is doped with at least one element, and the at least one element is Li, Mn, Ga, Ta, W, F, P, Na or Mo.

4. The composition of any one of claims 1-3, wherein the weight ratio of the niobium-titanium oxide in the active composition is larger than the weight ratio of the silicon active material in the active composition.

5. The composition of any one of claims 1-4, wherein the weight ratio of the niobium-titanium oxide in the active composition is Ptn, the weight ratio of the silicon active material in the active composition is Ps, and the following condition is satisfied:

$$1.2 \leq Ptn/Ps \leq 25.0.$$

6. The composition of any one of claims 1-5, wherein a particle diameter of the silicon active material is sD50, and the following condition is satisfied:

$$10 \text{ nm} \leq sD50 \leq 10000 \text{ nm}.$$

7. The composition of any one of claims 1-6, wherein a particle diameter of the niobium-titanium oxide is tnD50, and the following condition is satisfied:

$$20 \text{ nm} \le tnD50 \le 9000 \text{ nm}.$$

8. The composition of any one of claims 1-7, wherein a particle diameter of the silicon active material is sD50, a particle diameter of the niobium-titanium oxide is tnD50, and the following condition is satisfied:

$$0.01 \le tnD50/sD50 \le 20.0.$$

9. The composition of any one of claims 1-8, further comprising:
an inactive composition, wherein the inactive composition is selected from the group consisting of a polymer, a carbon material, a metal, an alloy, a non-metal oxide, a metal oxide and an organic compound.

10. The composition of any one of claims 1-9, wherein the active composition further comprises a carbon active material, the weight ratio of the niobium-titanium oxide in the active composition is Ptn, the weight ratio of the silicon active material in the active composition is Ps, a weight ratio of the carbon active material in the active composition is Pc, and the following condition is satisfied:

$$0.01 \le Ptn/(Ps+Pc) \le 25.0.$$

11. An anode, **characterized in** comprising:
the composition of any one of claims 1-10.

12. A battery, **characterized in** comprising:
the anode of claim 11.

13. The battery of claim 12, wherein a maximum among discharge volumetric capacities of a first cycle to a fifteen cycle of the battery with a current of 2C for charging and discharging is C2VMax, and the following condition is satisfied:

$$100 \text{ mAh/cm}^3 \le C2VMax \le 800 \text{ mAh/cm}^3.$$

14. The battery of claim 12 or claim 13, wherein a discharge volumetric capacity of a sixtieth cycle of the battery with a current of 2C for charging and discharging is C2V60, and the following condition is satisfied:

$$100 \text{ mAh/cm}^3 \le C2V60 \le 800 \text{ mAh/cm}^3.$$

15. The battery of any one of claims 12-14, wherein a discharge volumetric capacity of a fifth cycle of the battery with a current of 2C for charging and discharging is C2V5, a discharge volumetric capacity of a tenth cycle of the battery with the current of 2C for charging and discharging is C2V10, and the following condition is satisfied:

$$0.70 \le C2V10/C2V5.$$

16. The battery of any one of claims 12-15, wherein a discharge volumetric capacity of a fifth cycle of the battery with a current of 2C for charging and discharging is C2V5, a discharge volumetric capacity of a twentieth cycle of the battery with the current of 2C for charging and discharging is C2V20, and the following condition is satisfied:

$$0.60 \le C2V20/C2V5.$$

17. The battery of any one of claims 12-16, wherein a total number of Coulombic efficiency greater than 85% and smaller than 110% in first fifteen cycles of the battery with a current of 2C for charging and discharging is n85C2E15, and the following condition is satisfied:

$$10 \leq n85C2E15 \leq 15.$$

18. The battery of any one of claims 12-17, wherein a total number of Coulombic efficiency greater than 85% and smaller than 110% in first fifty cycles of the battery with a current of 2C for charging and discharging is n85C2E50, and the following condition is satisfied:

$$40 \leq n85C2E50 \leq 50.$$

19. The battery of any one of claims 12-18, wherein an average of Coulombic efficiencies in first fifteen cycles of the battery with a current of 2C for charging and discharging is aC2E15, and the following condition is satisfied:

$$80\% \leq aC2E15 \leq 110\%.$$

20. The battery of any one of claims 12-19, wherein an average of Coulombic efficiencies in first fifty cycles of the battery with a current of 2C for charging and discharging is aC2E50, and the following condition is satisfied:

$$75\% \leq aC2E50 \leq 110\%.$$

21. The battery of any one of claims 12-20, wherein a discharge volumetric capacity of a first cycle of the battery with a current of 1C for charging and discharging is C1V1, a discharge volumetric capacity of a first cycle of the battery with a current of 2C for charging and discharging is C2V1, and the following condition is satisfied:

$$0.50 \leq C2V1/C1V1.$$

22. A composition, **characterized in** comprising:

an active composition, comprising a niobium-titanium oxide and a silicon active material;
wherein the niobium-titanium oxide is a doped niobium-titanium oxide;
wherein the doped niobium-titanium oxide comprises a niobium element, a titanium element and an oxygen element.

23. The composition of claim 22, wherein the doped niobium-titanium oxide is doped with at least one element, and the at least one element is Li, Mn, Ga, Ta, W, F, P, Na or Mo.

24. The composition of claim 22 or claim 23, wherein a weight ratio of the niobium-titanium oxide in the active composition is Ptn, a weight ratio of the silicon active material in the active composition is Ps, and the following condition is satisfied:

$$1.2 \leq Ptn/Ps \leq 25.0.$$

25. The composition of any one of claims 22-24, wherein a particle diameter of the silicon active material is sD50, and the following condition is satisfied:

$$50 \text{ nm} \leq sD50 \leq 3000 \text{ nm}.$$

26. The composition of any one of claims 22-25, wherein a particle diameter of the silicon active material is sD50, a particle diameter of the niobium-titanium oxide is tnD50, and the following condition is satisfied:

$$0.01 \leq tnD50/sD50 \leq 20.0.$$

27. An anode, **characterized in** comprising:
    the composition of any one of claims 22-26.

28. A battery, **characterized in** comprising:
    the anode of claim 27.

29. The battery of claim 28, wherein a maximum among discharge gravimetric capacities of a first cycle to a fifteen cycle of the battery with a current of 2C for charging and discharging is C2GMax, and the following condition is satisfied:

$$100 \text{ mAh/g} \leq \text{C2GMax} \leq 800 \text{ mAh/g.}$$

30. The battery of claim 28 or claim 29, wherein a discharge gravimetric capacity of a sixtieth cycle of the battery with a current of 2C for charging and discharging is C2G60, and the following condition is satisfied:

$$100 \text{ mAh/g} \leq \text{C2G60} \leq 800 \text{ mAh/g.}$$

31. The battery of any one of claims 28-30, wherein a discharge volumetric capacity of a fifth cycle of the battery with a current of 2C for charging and discharging is C2V5, a discharge volumetric capacity of a sixtieth cycle of the battery with the current of 2C for charging and discharging is C2V60, and the following condition is satisfied:

$$0.50 \leq \text{C2V60/C2V5.}$$

32. The battery of any one of claims 28-31, wherein a total number of Coulombic efficiency greater than 90% and smaller than 110% in first fifteen cycles of the battery with a current of 2C for charging and discharging is n90C2E15, and the following condition is satisfied:

$$8 \leq \text{n90C2E15} \leq 15.$$

33. The battery of any one of claims 28-32, wherein a total number of Coulombic efficiency greater than 90% and smaller than 110% in first fifty cycles of the battery with a current of 2C for charging and discharging is n90C2E50, and the following condition is satisfied:

$$30 \leq \text{n90C2E50} \leq 50.$$

34. The battery of any one of claims 28-33, wherein a discharge volumetric capacity of a first cycle of the battery with a current of 2C for charging and discharging is C2V1, a discharge volumetric capacity of a first cycle of the battery with a current of 4C for charging and discharging is C4V1, and the following condition is satisfied:

$$0.50 \leq \text{C4V1/C2V1.}$$

Europäisches
Patentamt

European
Patent Office

Office européen
des brevets

**EUROPEAN SEARCH REPORT**

Application Number

EP 23 21 4974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 899 517 B (UNIV DALIAN MARITIME) 12 February 2021 (2021-02-12) * claims 1-3; examples 3,5,6 * | 1-34 | INV. H01M4/485 H01M4/131 H01M4/36 |
| X | CN 111 463 419 B (SUZHOU YUHAO NANO MAT CO LTD) 1 April 2022 (2022-04-01) * claim 8; examples 1,2 * | 1-34 | H01M4/38 |
| A | US 4 487 637 A (PADAMSEE HASAN S [US]) 11 December 1984 (1984-12-11) * table 1 * | 1-34 | |

TECHNICAL FIELDS
SEARCHED      (IPC)

H01M

The present search report has been drawn up for all claims

| Place of search | Date of completion of the search | Examiner |
|---|---|---|
| Munich | 31 May 2024 | González Junquera, J |

EPO FORM 1503 03.82 (P04C01)

## ANNEX TO THE EUROPEAN SEARCH REPORT
## ON EUROPEAN PATENT APPLICATION NO.

EP 23 21 4974

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | | Publication date | Patent family member(s) | Publication date |
|---|---|---|---|---|
| CN 108899517 | B | 12-02-2021 | NONE | |
| CN 111463419 | B | 01-04-2022 | NONE | |
| US 4487637 | A | 11-12-1984 | NONE | |

EPO FORM P0459

For more details about this annex : see Official Journal of the European Patent Office, No. 12/82